# EUROPÄISCHE PATENTSCHRIFT

(11) **EP 3 543 583 B1**
(45) Veröffentlichungstag und Bekanntmachung des Hinweises auf die Patenterteilung: **24.11.2021**
(21) Anmeldenummer: 19163735.4
(22) Anmeldetag: 19.03.2019
(51) Int. Cl.: F16L 55/165, F16L 55/179, B32B 1/08, B32B 5/02, B32B 7/12, B32B 27/12, B32B 27/18, B32B 27/32, B32B 27/36

(54) **SCHLAUCHLINER FÜR DIE SANIERUNG EINES KANALS, VERFAHREN ZUR HERSTELLUNG EINES SCHLAUCHLINERS UND VERWENDUNG EINES SCHLAUCHLINERS**
HOSE LINER FOR RENOVATING A CHANNEL, METHOD FOR THE PRODUCTION OF A HOSE LINER AND USE OF A HOSE LINER
GAINE DE CHEMISAGE POUR L'ASSAINISSEMENT D'UN CANAL, PROCÉDÉ DE PRODUCTION D'UNE GAINE DE CHEMISAGE ET UTILISATION D'UNE GAINE DE CHEMISAGE

(30) Priorität: 20.03.2018 DE 102018106561
(43) Veröffentlichungstag der Anmeldung: 25.09.2019
(73) Patentinhaber: Buergofol GmbH, 93354 Siegenburg (DE)
(72) Erfinder: Stark, Dr. Kurt, 91284 Neuhaus a. d. Pegnitz (DE)
(74) Vertreter: Canzler & Bergmeier Patentanwälte Partnerschaft mbB

(56) Entgegenhaltungen:
- EP-A1- 2 357 065
- EP-A1- 2 881 252
- EP-A1- 3 006 805
- DE-A1-102009 041 841
- DE-U1-202013 103 390

## Beschreibung

Die Erfindung betrifft einen Schlauchliner für die Sanierung eines insbesondere unterirdisch verlegten Kanals. Schlauchliner für die Kanalsanierung sind seit längerem bekannt. Beispielsweise ist es beim System Glasfaser-Schlauchliner mit UV- oder Dampfhärtung bekannt, in das zu sanierende Rohr eine als Gleitfolie bekannte, dickwandige Folie aus PE (Polyethylen) mit einer hohen Dichte (HDPE - High Density Polyethylene), die zumeist die Querschnittsform eines Halbkreises aufweist, einzubringen, welche an der Innenwand des Rohres angelegt wird. Anschließend wird ein flexibler Schlauchliner, auch Einlegeschlauch oder lediglich Liner genannt, in das zu sanierende Rohr eingezogen, wobei der Schlauchliner über die Gleitfolie gleitet (Einzugsverfahren). Hierdurch wird einerseits eine Beschädigung des Schlauchliners durch Kontaktvermeidung mit der Rohrinnenwand bzw. Gegenständen im Rohr verhindert, andererseits ist die Reibung zwischen Schlauchliner und Gleitfolie sehr niedrig und erleichtert ein Einziehen des Schlauchliners. Diese Funktionsweise ähnelt derjenigen eines Schuhlöffels.

Beim System Glasfaser-Schlauchliner mit UV- oder Dampfhärtung ist üblicherweise ein innerer und ein äußerer Schlauch vorhanden, zwischen denen ein Trägermaterial wie insbesondere Glasfasern eingebracht ist, welches mit reaktivem Kunststoffharz getränkt ist. Als reaktives Kunststoffharz kommen zum Beispiel handelsübliche UP-Harze (Polyester- bzw. ungesättigte Polyesterharze), VE-Harze (Vinylesterharze) oder EP-Harze (Epoxid-Harze) zum Einsatz. Die Härtung der Harze erfolgt bei UP- oder VE-Harzen zum Beispiel mit Hilfe von Photoinitiatoren. Die Härtung kann aber auch thermisch erfolgen. Der Schlauchliner wird im Rohr solange aufgeblasen oder mittels einer Flüssigkeit aufgeweitet, bis er an der Rohrinnenwand bzw. der Gleitfolie anliegt, um anschließend das Harz - beispielsweise mittels UV-Strahlung aus einer langsam durch das Rohr gezogenen UV-Strahlungsquelle - auszuhärten. Zum Schluss kann die innere Folie des Schlauchliners abgezogen und entfernt werden. Die Schicht mit dem Trägermaterial ist dann den durch das Rohr zu leitenden Substanzen exponiert.

Aus der WO 2012/159702 A1 ist ein Schlauchliner bekannt, bei dem außen um die Kombination aus schlauchförmiger Innenfolie, Harz-Träger-Lage und schlauchförmiger Außenfolie ein Schutzschlauch aus einem reißfesten, nicht dehnbaren und undurchsichtigen Werkstoff in Form von LKW-Planenmaterial, d.h. gewebeverstärktem PVC, angeordnet ist. Dieser weist eine derartige Breite auf, dass die beiden Längsränder beim Umwickeln der schlauchförmigen äußeren Folie nicht aneinander anstoßen oder sich überlappen. Zur Überbrückung der sich somit, im Querschnitt gesehen, auftuenden Lücke zwischen den Rändern des Schutzschlauches ist ein Verbindungsfolienstück aus einem dehnbaren Material vorgesehen, dass mit diesen Rändern des Schutzschlauches verbunden ist. Die frühzeitige Aushärtung des Harzes wird dadurch verhindert, dass die äußere Folie undurchlässig für UV-Strahlung ausgebildet ist.

Aus der DE 10 2014 114 627 A1 ist ein Schlauchliner für grabenlose Kanalsanierung bekannt, bei dem ein mechanisch schützendes, intransparentes Außenfoliensystem verwendet wird, so dass auf Gleitfolien zum Einziehen des Liners verzichtet werden kann. Das Außenfoliensystem ist gegen UV- und sichtbares Licht im Wesentlichen undurchlässig, was zum Beispiel - wie vielfach aus dem Stand der Technik bekannt - durch Verwendung von einer zusätzlichen blickdichten UV- und Lichtschutzfolie realisiert sein kann.

Aus der EP 2 379 625 A1 ist des Weiteren eine äußere kontakttransparente UV- und Lichtschutzfolie bekannt, wobei aber kein mechanischer Schutz für den Schlauchliner vorgesehen ist, so dass der Schlauchliner beim Einziehen in den Kanal Gefahr laufen würde, beschädigt und zerstört zu werden. Dies versucht man durch die

Verwendung einer schon weiter oben beschriebenen Gleitfolie zu vermeiden, die wie eine Art Schuhlöffel den Schlauchliner in den zu sanierenden Kanal leitet.

Aus der EP 3 006 805 A1 ist ein Schlauchliner für die Kanalsanierung bekannt, mit mindestens einer Schlauchinnenfolie und einer die Schlauchinnenfolie umgebenden Harz-Träger-Lage, wobei das Harz mittels UV-Strahlung aushärtbar ist. Der Schlauchliner weist ein die Harz-Träger-Lage umgebenden, mechanisch schützenden Außenfoliensystem mit mindestens einer sich in Längsrichtung des Schlauchliners erstreckenden Außenfolie, wobei die Längsrander der Außenfolie oder der Außenfolien in Umfangsrichtung des Schlauchliners überlappend miteinander verbunden sind, wobei die daraus resultierende mindestens eine Verbindungsstelle bei Dehnung in Radialrichtung beim Einbringen des Schlauchliners in einen zu sanierenden Kanal sich dehnt und ggf. bricht. Die mindestens eine Außenfolie weist jeweils mindestens eine Schicht aus einem mechanisch sehr stabilen und im Wesentlichen nicht oder nur sehr schlecht dehnbaren Werkstoff auf. Die mindestens eine Außenfolie weißt mindestens eine für UV-Strahlung und ggf. sichtbares Licht im Wesentlichen undurchlässige Schicht auf. Diese Außenschicht ist beispielsweise eine PVC-verstärkte Gewebeschicht.

Es ist die Aufgabe der vorliegenden Erfindung, einen Schlauchliner mit einer gesteigerten Funktionalität, insbesondere hinsichtlich Handhabbarkeit, Praktikabilität und Widerstandsfähigkeit zu schaffen.

Diese Aufgabe wird durch einen Schlauchliner mit den Merkmalen des Anspruchs 1 gelöst.

Die Erfindung stellt demnach einen Schlauchliner zur Verfügung, der erfindungsgemäß einerseits ein mechanisch stabiles Außenfoliensystem aufweist, welches einen Transmissionsgrad für sichtbares Licht bei mindestens einer Wellenlänge im Bereich von 550 nm bis 800 nm von mindestens 1% aufweist, und weiterhin ein frühzeitiges Aushärten des Harzes (z.B. während der Lagerung) durch Abhalten von UV-Strahlung und kurzwelliges Licht verhindert; bei langwelligerem Licht ab ca. 500 nm härtet das Harz hingegen nicht aus. Sowohl die UV-Strahlung und kurzwelliges, sichtbares Licht absorbierende und/oder reflektierende, einschichtige oder mehrschichtige Folie, die im Folgenden der Einfachheit halber nur als "Außenfolie" bezeichnet wird, als auch die mindestens eine Verstärkungsbahn des Außenfoliensystems sind derart ausgebildet, dass das Außenfoliensystem insgesamt einen Transmissionsgrad für sichtbares Licht bei mindestens einer Wellenlänge im Bereich von 550 nm bis 800 nm von mindestens 1% aufweist. Im Folgenden wird diese Transmissionseigenschaft des Außenfoliensystems auch als "Durchscheinung" bzw. "durchscheinend" bezeichnet. Der angegebene Grad der Durchscheinung von sichtbarem Licht bei mindestens einer Wellenlänge im Bereich von 550 nm bis 800 nm ist insbesondere dem UV-Vis-Spektrum zu entnehmen.

Der Transmissionsgrad des Außenfoliensystems ergibt sich aus der Multiplikation der Transmissionsgrade der in Durchleuchtungsrichtung hintereinander angeordneten Bestandteile des Außenfoliensystems, vorliegend also zumindest der mindestens einen Außenfolie und der mindestens einen Verstärkungsbahn. Die Transmissionsgrade der Bestandteile des Außenfoliensystems werden hierbei so gewählt, dass dessen Transmissionsgrad für sichtbares Licht ab einer Wellenlänge von 550 nm bis 800 nm bei mindestens eine Wellenlänge mindestens 1% beträgt. Der Einfallswinkel der Lichtwellen ist hierbei senkrecht zur Oberfläche des Außenfoliensystems definiert. Es versteht sich, dass zum Erreichen dieses Transmissionsgrades eine geeignete Dicke der Bestandteile des Außenfoliensystems zu wählen ist.

Die verbesserte Handhabbarkeit des erfindungsgemäßen Außenfoliensystems und des Schlauchliners ergibt sich hierbei - nach Aushärtung des Harzes - aus der besseren Erkennbarkeit derjenigen Stellen, an denen Zu- und Abläufe zum (Haupt-)Kanal, also Ab- und Verzweigungen, anzubringen sind. Im Gegensatz zu einem völlig blickdichten und undurchsichtigen Außenfoliensystem ist es nunmehr - nach Aushärtung des Schlauchliners im Kanal - möglich, die Zuläufe sichtbar zu machen, die z.B. ein Roboter ausfräsen muss, wenn der Kanal an dieser Stelle eine Verzweigung, einen Zulauf oder Ablauf haben soll. Wenn also in das Innere eines ausgehärteten Schlauchliners eine Kamera eingebracht und ein Roboter oder eine andere entsprechende Vorrichtung zu der Stelle gefahren wird, an der vermeintlich eine Abzweigung vom sanierten Kanal oder ein Zu- oder Ablauf anzubringen ist, kann diese Stelle ohne Weiteres exakt lokalisiert werden.

Die erfindungsgemäße Durchscheinung durch den Schlauchliner wird insbesondere durch das Außenfoliensystem bewirkt, da die übrigen Bestandteile - also insbesondere ein Harz-Träger-System und eine Innenfolie (soweit diese überhaupt im fertig aufgestellten Kanal verbleibt) - in aller Regel für sichtbares Licht (hier: ab einer Wellenlänge von 550 nm) wesentlich transparenter sind als insbesondere die mechanisch stabile Verstärkungsbahn. Insbesondere sind die Zu- und Abläufe zum und vom Kanal sehr leicht zu erkennen, wenn man von außen, d.h. von der zulaufenden Seite zum Hauptkanal hin Licht einstrahlt (oder in umgekehrter Richtung). Dieses eingestrahlte Licht hat eine bestimmte Wellenlänge oder deckt einen bestimmten Wellenlängenbereich ab, wobei mindestens bei einer Wellenlänge im Bereich von 550 nm bis 800 nm, die von dieser Lichtquelle abzustrahlen ist, erfindungsgemäß eine Transmission von mindestens 1 % des Außenfoliensystems vorliegt. Dieses Licht durchdringt auch den ausgehärteten Schlauchliner und ist daher mittels einer optischen Detektion im Inneren des Kanals erkennbar, so dass ein Fräsroboter genau an diese Stelle ein Loch für einen Zu- oder Ablauf fräsen kann.

Außerdem kann das Trägermaterial - aufgrund optischer Kontrolle (auch) von der Seite der Verstärkungsbahn her - viel besser und homogener mit Harz getränkt werden, da es unmittelbar erkennbar ist, an welchen Stellen des Trägermaterials noch Harz fehlt.

Durch die mechanische Stabilität ist der Schlauchliner zudem beim Einziehen in einen zu sanierenden Kanal vor Beschädigungen geschützt, da auch relativ scharfkantige Unebenheiten entlang der Kanalwand die Verstärkungsbahn nicht aufschlitzen.

Das erfindungsgemäße Außenfoliensystem kann, im Querschnitt gesehen, aus einem einzigen durchgehenden Abschnitt bestehen, bei dem sich seine Längsränder überlappen und im Überlappungsbereich miteinander verbunden sind. Oder es sind mehrere, vorzugsweise zwei, Abschnitte vorhanden, welche sich an ihren Längsrändern teilweise überlappen und/oder miteinander gesiegelt sind, so dass zwei Überlappungsbereiche bzw. Siegelnähte vorgesehen sind. Hierbei ist vorzugsweise eine vollständige Ummantelung der Harz-Träger-Lage mit einer oder mehreren der besagten Außenfolien vorgesehen, während eine oder mehrere Verstärkungsbahnen nicht über den gesamten Umfang vorgesehen sein müssen, sondern insbesondere nur in den mechanisch kritischeren Bereichen, also insbesondere der Kanalsohle.

Die Ein- und Weiterreißfestigkeit der mindestens einen Verstärkungsbahn ist bevorzugt sehr hoch, d.h. sie ist vorzugsweise praktisch nicht einreißbar bzw. wenn sie eingerissen ist, so liegt der Kraftaufwand für das Weiterreißen sehr hoch. Zudem weist die mindestens eine Verstärkungsbahn vorzugsweise eine sehr geringe bis vernachlässigbare Dehnung zumindest in Maschinenrichtung (md - machine direction), d.h. in Herstellungslaufrichtung, auf. Mit anderen Worten ist eine hohe Kraft in Maschinenrichtung vonnöten, um überhaupt eine gewisse Dehnung zu erzeugen.

Die mindestens eine Verstärkungsbahn weist vorzugsweise eine oder mehrere der folgenden mechanischen Eigenschaften auf:
a) ihre Zugfestigkeit längs M gemäß DIN EN ISO 527-3 ist größer 20 N/mm², bevorzugt größer 30 N/mm², am meisten bevorzugt größer 40 N/mm²;
b) ihre Zugfestigkeit Quer M gemäß DIN EN ISO 527-3 ist größer 20 N/mm², bevorzugt größer 30 N/mm², am meisten bevorzugt größer 40 N/mm²;
c) ihre Zugfestigkeit nach DIN EN ISO 1421 ist größer als 200 N/5cm, bevorzugt größer als 400 N/5cm, besonders bevorzugt größer als 600 N/5cm, beispielsweise größer als 800 N/5cm, am meisten bevorzugt größer als 1000 N/5cm;
d) ihre Reißdehnung längs (εB) und Reißdehnung quer (εB) gemäß DIN EN ISO 527-3 bzw. DIN EN ISO 527-3 ist kleiner 200 %, bevorzugt kleiner 100 %, am meisten bevorzugt kleiner 50 %;
e) ihre Weiterreißfestigkeit Trapez längs bzw. Trapez quer gemäß DIN 53363 bzw. DIN 53363 ist größer 100 N, bevorzugt größer 200 N; und/oder
f) ihre Durchstoßfestigkeit gemäß ASTM E 154 ist größer 300 N, bevorzugt größer 500 N, besonders bevorzugt größer 800 N.

Mit den genannten mechanischen Eigenschaften kann die mindestens eine Verstärkungsbahn hohen Belastungen beim Einbringen in einen zu sanierenden Kanal standhalten.

Vorzugsweise weist das Außenfoliensystem einen Transmissionsgrad für sichtbares Licht bei mindestens einer Wellenlänge im Bereich von 550 nm bis 800 nm von mindestens 3% auf, besonders bevorzugt von mindestens 5%. Je höher der Transmissionsgrad bei den besagten Bedingungen, desto besser die Erkennbarkeit von durchgestrahltem Licht.

Besonders bevorzugt sind die mindestens eine Außenfolie und die mindestens eine Verstärkungsbahn miteinander verbunden, gemäß einer vorteilhaften Ausführungsform vollflächig über die Fläche der kleineren von beiden Folien oder, bei gleicher Größe, über deren gesamte Flächen. Die besagte Anordnung ist demnach als Verbund ausgebildet. Dieser Verbund ist als Ganzes einfach zu handhaben und erleichtert somit das Aufbringen auf die Harz-Träger-Lage (oder auf eine über der Harz-Träger-Lage angeordnete Folie) sowie das Einbringen des Schlauchliners in einen zu sanierenden Kanal. Gemäß einer Alternative liegt die mindestens eine Außenfolie lose und unverbunden an der mindestens einen Verstärkungsbahn an. In diesem Fall kann sich die mindestens eine Außenfolie beim Aufrichten (zumeist realisiert durch Aufblasen) des Schlauchliners ausdehnen, wobei sie an der Innenseite der mindestens einen Verstärkungsbahn entlanggleitet und diese - falls sie nicht umfangseitig geschlossen ist - dabei aufzuweiten vermag.

Erfindungsgemäß ist die mindestens eine Verstärkungsbahn als Gewebe ausgebildet, die vorzugsweise überwiegend oder vollständig aus Polyestergarn besteht. Das Gewebe weist erfindungsgemäß eine Maschenweite in md-Richtung und/oder in cd-Richtung von kleiner als 2 cm auf, bevorzugt kleiner als 1 cm, am meisten bevorzugt kleiner als 5 mm. Die md-Richtung ist die Maschinenrichtung, das heißt die Herstellungslaufrichtung und die cd-Richtung ist die Querrichtung. Je enger die Maschenweite, desto stabiler ist das Gewebe. Andererseits muss das Gewebe noch zumindest die besagte Durchscheinung des Außenfoliensystems garantieren, damit sich die erfindungsgemäßen Vorteile ergeben.

Das Gewebegarn ist zweckmäßigerweise sehr stabil und weist beispielsweise eine Garnstärke von mehr als 100 dtex, bevorzugt mehr als 200 dtex, besonders bevorzugt mehr als 400 dtex und am meisten bevorzugt mehr als 1000 dtex auf. Die Zug- bzw. Reißfestigkeit des verwendeten Gewebegarns beträgt vorzugsweise mehr als 500 N/ 5 cm, besonders bevorzugt mehr als 1000 N/5 cm.

Das Gewebe der Verstärkungsbahn ist gemäß einer bevorzugten Variante von einer Polymer-Beschichtung zumindest auf einer Seite benetzt/beschichtet und vorzugsweise von beiden Seiten umhüllt. Die Polymer-Beschichtung, die bei beidseitiger Applikation auf beiden Seiten gleich oder verschieden sein kann, ist hierbei - zumindest nach Trocknung -durchscheinend ausgebildet, um die Transmission bzw. Transparenz der Verstärkungsbahn und somit insgesamt des Außenfoliensystems zu erhalten. Vorzugsweise ist das Polymer zudem siegelfähig. Bei unterschiedlichen Konsistenzen der Polymerbeschichtung auf jeder der beiden Seiten des Gewebes ist beispielsweise die Schicht auf einer Seite ein Polyethylen, während die Schicht auf der anderen Seite z.B. PVC sein kann, oder auch ein Klebstoff, beispielsweise ein drucksensibler Klebstoff (s. auch weiter unten).

Die Herstellung der Verstärkungsbahn ist - in einer vorteilhaften Ausführungsform - auch ausgehend von einer Folie möglich, indem diese mit dem Gewebe mit Hilfe eines Polymers, eines Hotmelts oder Kaschierklebers derart kaschiert wird, dass sich die Folie und das Gewebe fest miteinander verbinden, wobei das Polymer, der Hotmelt oder der Kaschierkleber auf der Seite des Gewebes vorzugsweise eine geschlossene Außenfläche bilden, das Gewebe also auf der der Folie abgewandten Seite vollständig von dem Polymer, dem Hotmelt oder Kaschierkleber überdeckt ist.

Als Kleber können diverse Klebstoffe verwendet werden, also lösungsmittelfreie oder Lösungsmittel enthaltende, Ein- oder Mehrkomponentenkleber, UV-Acrylate, oder sog. PSA (pressure sensitive adhesives) usw.

Besonders bevorzugt ist der Einsatz eines Polymers oder Hotmelts mit Klebeeigenschaften. Es kommen hierfür beispielsweise handelsübliche Polymere (wie LDPE, LLDPE) in Betracht. Das Polymer kann zum Beispiel eine Folie mit einem Gewebe im Zuge einer Extrusionskaschierung miteinander verbinden.

Die verwendete Folie, die mit dem Gewebe mit Hilfe eines Polymers oder Hotmelts oder Klebers verbunden wird, ist bevorzugt die UV-Strahlung und kurzwelliges, sichtbares Licht absorbierende und/oder reflektierende Außenfolie. Hierbei bilden das Gewebe und die Außenfolie, die mittels eines Polymers oder Hotmelts oder Klebers miteinander verbunden sind, das erfindungsgemäße Außenfoliensystem mit der besagten Eigenschaft der Durchscheinung bzw. Transmission.

Bei einer Alternative kann ein Kleber auf die Verstärkungsbahn, umfassend das Gewebe und die Polymerschicht, und/oder auf die mindestens eine Außenfolie aufgetragen werden, um diese beiden miteinander zu verbinden.

Gemäß einer Alternative zum Gewebe kann die Verstärkungsbahn als ein- oder mehrschichtige, vollflächige, durchscheinende Verstärkungsfolie ausgebildet sein. Beispielsweise ist sie überwiegend oder vollständig aus Polyester oder HDPE hergestellt. Andere Materialien, welche die mechanische Widerstandsfähigkeit liefern und zudem, wie gefordert, durchscheinend sind, sind ebenfalls ohne Weiteres möglich.

Unabhängig davon, ob die mindestens eine Verstärkungsbahn eine geschlossene Oberfläche aufweist, insbesondere bei Ausbildung als Verstärkungsfolie, oder als Gewebe ausgebildet ist, ist die besagte Verbindung der mindestens einen Außenfolie mit der mindestens einen Verstärkungsbahn gemäß vorteilhafter Ausgestaltungen durch Aufbringen eines Klebers auf eine oder beide der einander zugewandten Seiten der mindestens einen Verstärkungsbahn und der mindestens einen Außenfolie realisierbar.

Generell kann die Verbindung zwischen der mindestens einen Außenfolie und der Verstärkungsbahn mittels Thermokaschierung, Extrusionskaschierung, Kleberkaschierung, Kalandrierung oder sonstige dem Fachmann geläufige Verbindungsarten realisiert werden.

Vorzugsweise ist die mindestens eine Außenfolie über den vollständigen Umfang des Schlauchliners vorhanden, was bei einer bevorzugten Ausführungsform jedoch nicht für die Verstärkungsbahn gilt. Der Gedanke hinter dieser Lösung ist, dass die Außenfolie aufgrund ihrer UV-Schutz-Wirkung für das Harz über den ganzen Umfang des Schlauchliners vorhanden sein sollte, dies jedoch für die mindestens eine Verstärkungsbahn nicht unbedingt der Fall sein muss. Die Hauptbelastungszone des Schlauchliners beim Einziehen in einen Kanal liegt im Kanalsohlenbereich und an den links und rechts anschließenden Seitenabschnitten. In diesem Bereich ist es vorteilhaft, wenn die mindestens eine Verstärkungsbahn vorhanden ist; zur Kanaldecke hin ist die mechanische Belastung des Schlauchliners geringer, so dass hier ggf. auf eine Verstärkungsbahn verzichtet werden kann.

Ein weiterer Vorteil einer nur teilweisen Ummantelung mit mindestens einer Verstärkungsbahn liegt darin, dass auf nicht von einer Verstärkungsbahn abgedeckte Bereiche der mindestens einen Außenfolie eine weitere Deckfolie aufgebracht werden kann, die eine höhere Dehnfähigkeit als die Verstärkungsbahn(en) aufweist. Somit kann sich der Schlauchliner beim Aufstellen im Kanal, wozu üblicherweise Druckluft verwendet wird, in diesen nicht von der Verstärkungsbahn abgedeckten Bereichen weiter dehnen und sich an die Kanalwand anschmiegen. Auf diese Weise kann zudem ein größerer Querschnitt des mit dem Schlauchliner ausgekleideten Kanals erzielt werden. Auch ohne eine solche Deckfolie können die nicht von der Verstärkungsbahn abgedeckten Bereiche der Außenfolie sich beim Aufweiten des Schlauchliners ausdehnen.

Schließlich ist es auch preiswerter, wenn die Verstärkungsbahn nicht für die gesamte Ummantelung eingesetzt wird, sondern nur für die besonders zu schützenden Teilbereiche.

Gemäß einer dementsprechenden Ausführungsform überstreicht die mindestens eine Verstärkungsbahn, die an der Kanalsohle zur Anlage vorgesehen ist, in Umfangsrichtung des Schlauchliners vorzugsweise einen Winkelbereich von mehr als 180°, wie beispielsweise von mehr als 240°.

Wie oben schon erwähnt, kann das erfindungsgemäße Außenfoliensystem aus einem oder mehreren - in Umfangsrichtung gesehen - aneinander anschließenden Teilen bestehen. Bei einer Ausführungsform umfasst die Anordnung nur eine einzige Außenfolie, die an einer einzigen Verstärkungsbahn anliegt. Diese Anordnung kann sich - in Umfangsrichtung gesehen - um mehr als 360° erstrecken, weist also einen Überlappungsbereich auf. Dieser Überlappungsbereich kann verschieden gestaltet sein. Beispielsweise überlappen sich sowohl die Verstärkungsbahn als auch der Außenfolie im Bereich ihrer beiden Längsränder.

Das überstehende Ende der Anordnung (ob mit oder ohne Außenfolie in dem Überlappungsbereich) kann einfach auf den darunterliegenden Bereich gelegt, also gewickelt, sein. Alternativ können beide ihrer Längsränder lose überstehen und von dem darunter liegenden Schlauchsystem abgehoben sowie aufeinander gelegt werden, wobei also die inneren Flächen der überstehenden Ränder aneinander liegen (ähnlich einem Wurstzipfel). Dieser Abschnitt kann dann zur einen oder anderen Seite an das darunter liegende Schlauchsystem angelegt bzw. geklappt werden und optional angeklebt werden (zum Beispiel mit Klebebändern oder mit anderen Klebstoffen). Die aneinander anliegenden Abschnitte können beispielsweise miteinander verbunden, z.B. versiegelt, werden, was sich beispielsweise im Falle von Polyethylen-Schichten anbietet. Eine Verbindung der beiden Abschnitte im Überlappungsbereich ist aber nicht zwangsläufig notwendig.

Bei einer vorteilhaften Alternative sind mindestens zwei Außenfolien vorgesehen, die sich jeweils um weniger als 360° in Umfangsrichtung erstrecken, aber mit gegenseitiger Überlappung aneinander anschließen, wobei vorzugsweise Verbindungsstellen, die in Längsrichtung des Schlauchliners verlaufen, zwischen den Längsrändern der mindestens zwei Außenfolien vorgesehen sind.

Gemäß einer Variante liegen diese Außenfolien jeweils an einer Verstärkungsbahn an, bevorzugt flächendeckend, d.h. sich über die jeweilig gleichen Flächen erstreckend mit einheitlichen Rändern.

Weiterhin ist es möglich, dass zwei Verstärkungsbahnen an ihren Längsrändern mittels Verbindungsstellen beispielsweise verklebt sind.

Die besagten Verbindungsstellen einer oder mehrerer Außenfolien und/oder einer oder mehrerer Verstärkungsbahnen, wobei die Verbindungsstellen vorzugsweise in Längsrichtung des Schlauchliners verlaufen, sind auf unterschiedliche Art und Weise realisierbar, beispielsweise mittels eines ggf. doppelseitigen Klebebands, einer thermischen Schweißnaht (Siegelung), eines Hotmelt-Klebers oder eines sonstigen Klebers in Form einer durchgehenden Klebenaht bzw. Siegelnaht oder eines unterbrochenen Kleberauftrags. Auch sind schmale klebende Deckstreifen möglich, welche beispielsweise zwei Längsränder einer oder mehrerer Verstärkungsbahnen verbinden.

Eine vorteilhafte Ausführungsform sieht vor, dass in der Einbausituation des Schlauchliners in einem Kanal eine im Querschnitt gesehen obere Außenfolie vorgesehen ist, die in Umfangsrichtung des Schlauchliners einen Winkelbereich von 180° oder weniger als 180° überstreicht und von oben auf eine untere Außenfolie, die sich über 180° oder mehr als 180° in Umfangsrichtung erstreckt, aufgesetzt und randseitig mit dieser verbunden ist. Hierbei liegt die mindestens eine Verstärkungsbahn bevorzugt mindestens an der unteren Außenfolie an, zumindest teilweise oder vorzugsweise vollständig. Diese Ausgestaltung hat den schon oben angesprochenen Vorteil, dass die nicht von der Verstärkungsbahn abgedeckten Bereiche der Außenfolie(n) sich beim Aufweiten des Schlauchliners im Kanal dehnen können.

Das organische oder anorganische Farbpigment oder der Farbstoff in der mindestens einen Außenfolie absorbiert und/oder reflektiert vorzugsweise Licht im Wellenbereich von 350 bis 500 nm. Insbesondere wird durch die mindestens eine Schicht bevorzugt eine Transmission im Wellenlängenbereich von 350 bis 500 nm, bevorzugt von 350 bis 450 nm weitgehend bis nahezu vollständig unterbunden, insbesondere zu mehr als 99%. Die mindestens eine Außenfolie weist hierzu vorzugsweise mindestens eine für UV-Strahlung und ggf. sichtbares Licht im niedrigen Wellenlängenbereich im Wesentlichen undurchlässige Schicht auf. Hierzu beinhaltet diese Schicht beispielsweise organische und/oder anorganische Farbpigmente, Farbstoffe sowie ggf. UV-Absorber bzw. Verbindungen, die dem Fachmann bekannt sind, z.B. aus der DE 10 2009 041 841 A1.

Das organische oder anorganische Farbpigment, das in der mindestens einen Außenfolie vorliegt, ist mindestens ein Farbpigment, das aus der Gruppe ausgewählt ist, die Carbonyl-Farbstoffe, vorzugsweise Chinone, Indigo-Farbstoffe und Chinacridone, Azo-Verbindungen, Cyanin-Verbindungen, vorzugsweise Triphenylmethan-Verbindungen, Azomethine, Isoindoline, Dioxazine, Metalloxide, Übergangsmetalloxide, Metalloxidhydrate und Übergangsmetalloxidhydrate umfasst. Das mindestens eine Farbpigment ist vorzugsweise ein gelbes Farbpigment oder ein gelber Farbstoff aus dieser Gruppe.

Die mindestens eine Außenfolie ist bevorzugt mehrschichtig aufgebaut, wobei mindestens einer ihrer Oberflächenschichten vorzugsweise ein Olefin-Homo- oder -Copolymer enthält, vorzugsweise zu mehr als 50 Gew.-%.

Vorzugsweise beträgt die Dicke des Außenfoliensystems, gemessen in einem Bereich, in dem eine Verstärkungsbahn an einer Außenfolie anliegt, zwischen 50 und 10.000 µm, bevorzugt zwischen 100 und 5.000 µm und besonders bevorzugt zwischen 200 µm und 1000 µm. Beispielsweise liegt diese Dicke unter 500 µm. Die Dicke des Außenfoliensystems ist auch auf den erfindungsgemäß einzustellenden Transmissionsgrad abgestimmt.

Das Flächengewicht des Außenfoliensystems liegt vorzugsweise zwischen 100 g/qm und 1000 g/qm, bevorzugt zwischen 300 g/qm und 800 g/qm.

Auf der zur Harz-Träger-Lage gerichteten Innenseite mindestens einer der Außenfolien, vorzugsweise aller Außenfolien (wenn überhaupt mehrere vorhanden sind), ist besonders bevorzugt ein Vlies oder ein anderes für Flüssigkeiten und Harze saugfähiges Material aufgebracht. Im Rahmen dieser Erfindung wird der Kürze halber häufig nur der Begriff "Vlies" verwendet, wobei hiermit auch anderr für Flüssigkeiten und Harze saugfähige Materialien mitumfasst sein sollen. Das Vlies dient der besseren Anhaftung der Außenfolie(n) an das Harz der Harz-Träger-Lage, dem Austreiben von überschüssiger Luft und somit der Stabilität des Schlauchliners, sowohl bei der Handhabung als auch im verbauten Zustand.

Das Vlies beeinträchtigt die Transmission des Lichts nur in geringem Maße, da es insbesondere bei Kontakt mit Harz durchscheinender wirkt. Gleiches gilt auch für das verwendete Trägermaterial, z.B. Glasfasern. In beiden Fällen wird die Transmission von sichtbarem Licht bei Kontakt mit Harz üblicherweise erhöht.

Gemäß einer Alternative ist zwischen der Harz-Träger-Lage und dem Außenfoliensystem mindestens eine Wickelfolie oder eine Verkleidungsfolie (Schutzfolie) vorgesehen, die optional mit einem Vlies oder einem anderen für Flüssigkeiten und Harze saugfähigem Material verbunden ist. Die Verkleidungs- bzw. Schutzfolie sowie das Vlies weisen in aller Regel eine hohe Transmission (zumindest) ab einer Wellenlänge von 550 nm auf und beeinflussen daher die Gesamttransmission des Schlauchliners nicht in nennenswertem Maße. Die mindestens eine weitere Wickelfolie oder Verkleidungsfolie bzw. Schutzfolie kann beispielsweise eine PE-PA-PE-Folie sein, die z.B. 50 µm dick ist mit dem folgenden Aufbau: PE 15 µm, Haftvermittler 5 µm, PA 10 µm, Haftvermittler 5 µm, PE 15 µm. Sie kann gegen ein 50 g/qm Vlies kaschiert sein, wobei das Auftragsgewicht des Klebers oder des Polymers zur Kaschierung 15 g/qm betragen kann.

Zur Verbindung der mindestens einen Außenfolie oder einer Verkleidungs- bzw. Schutzfolie oder einer Wickelfolie einerseits und dem Vlies bzw. generell einem saugfähigen Material (in der Regel ein Nonwoven) andererseits kann eine Thermokaschierung, eine Extrusionskaschierung, eine Kleberkaschierung, eine Kalandrierung oder sonstige dem Fachmann geläufige Verbindungsarten zum Einsatz kommen.

Vorzugsweise ist zumindest eine Schicht in der mindestens einen besagten Außenfolie und/oder in der zuvor genannten Wickel- oder Verkleidungsfolie vorgesehen, die eine Barrierefunktion gegen Komponenten des reaktiven Harzes besitzt. Diese Barrierefunktion übernimmt vorzugsweise ein Polyamid, das insbesondere als Styrolbarriere wirkt und den Durchtritt von Harzbestandteilen der Harz-Träger-Lage verhindert. Die geforderte Transmission bzw. Durchscheinung wird durch diese Komponenten nicht nennenswert beeinflusst.

Die Erfindung betrifft des Weiteren ein Verfahren zur Herstellung des Schlauchliners, der zuvor mit der Variante der Verstärkungsbahn als Gewebe beschrieben wurde. Gemäß dem erfindungsgemäßen Verfahren wird auf das Gewebe eine Polymerschicht aufgebracht, welche das Gewebe mindestens auf einer Seite benetzt oder beschichtet, vorzugsweise von beiden Seiten umhüllt, und in einer besonders bevorzugten Ausführungsform Klebereigenschaften aufweist, um das Gewebe mit der mindestens einen Außenfolie zu verkleben.

Schließlich betrifft die Erfindung auch die Verwendung des hier beschriebenen Schlauchliners mit einem wie hier beschriebenen Außenfoliensystems bei der grabenlosen Kanalsanierung.

In den Figuren sind schematisch sechs verschiedene Ausführungsbeispiele der Erfindung dargestellt. Es zeigen:
- **Fig. 1**: eine erste Ausführungsform eines erfindungsgemäßen Schlauchliners mit einem Außenfoliensystem, umfassend zwei Außenfolien und eine nur teilweise umlaufende Verstärkungsbahn, im Querschnitt;
- **Fig. 2**: eine zweite Ausführungsform eines erfindungsgemäßen Schlauchliners mit einem Außenfoliensystem, umfassend zwei Außenfolien und eine nur teilweise umlaufende Verstärkungsbahn, im Querschnitt;
- **Fig. 3**: eine dritte Ausführungsform eines erfindungsgemäßen Schlauchliners mit einer einzigen umlaufenden Außenfolie und einer nur teilweise umlaufenden Verstärkungsbahn, im Querschnitt;
- **Fig. 4**: eine vierte Ausführungsform eines erfindungsgemäßen Schlauchliners, bei dem sowohl Außenfolie als auch Verstärkungsbahn umlaufen, im Querschnitt;
- **Fig. 5**: eine fünfte Ausführungsform eines erfindungsgemäßen Schlauchliners mit zwei Teilabschnitten, die jeweils eine Außenfolie und eine Verstärkungsbahn aufweisen, im Querschnitt, und
- **Fig. 6**: eine sechste Ausführungsform eines erfindungsgemäßen Schlauchliners mit einer Wicklung einer Verstärkungsfolie mit daran anliegender Außenfolie, im Querschnitt.

Zu beachten ist, dass die geometrischen Relationen der Bestandteile der Schlauchliner in allen Figuren nicht maßstabsgetreu wiedergegeben sind.

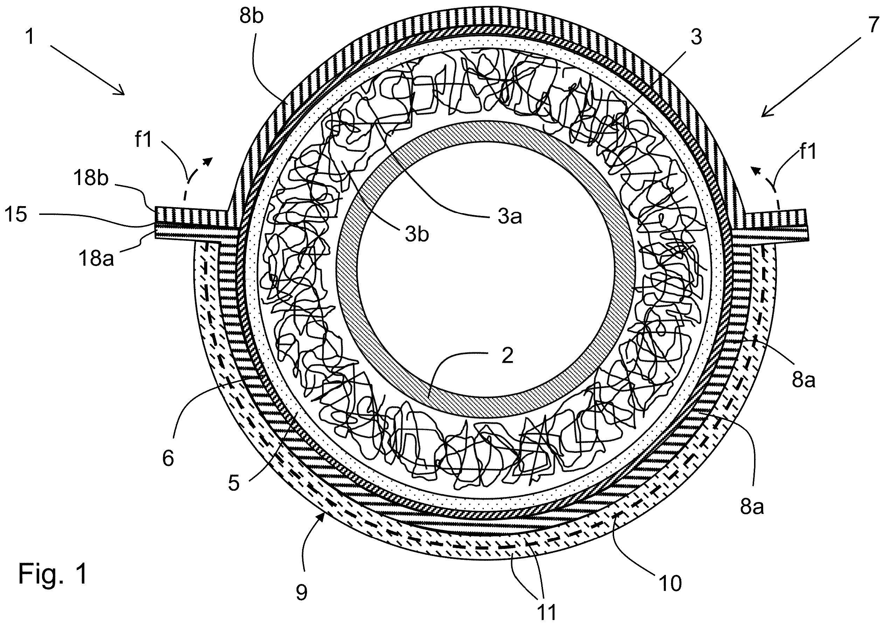

Die Fig. 1 bis 6 zeigen allesamt Schlauchliner 1 im Querschnitt, die im aufgestellten Zustand dargestellt sind. Bei Lagerung und Transport werden sie flach abgelegt. Nach Einbringen in einen zu sanierenden Kanal werden sie mit Druckluft oder Flüssigkeit aufgeblasen bzw. aufgeweitet.

In der Fig. 1 ist ein erstes Ausführungsbeispiel eines erfindungsgemäßen Schlauchliners 1 zur Auskleidung eines zu sanierenden Kanalrohrs dargestellt. Der Schlauchliner 1 erstreckt sich in Längsrichtung (in die Blattebene hinein) üblicherweise über dutzende oder sogar hunderte von Metern. Er umfasst eine aus Kunststoff-Materialien bestehende, ein- oder mehrschichtige Schlauchinnenfolie 2, eine Harz-Träger-Lage 3 mit einem Trägermaterial 3a und einem UV-reaktiven Harz 3b und eine die Harz-Träger-Lage 3 umgebende, ebenfalls aus Kunststoff-Materialien bestehende Schutz- oder Wickelfolie 6. Diese Schutz- oder Wickelfolie 6 kann auf der zum Harz-Trägermaterial gerichteten Seite noch ein für Flüssigkeiten und Harze saugfähiges Material, wie z.B. ein Vlies 5, aufweisen (s. hierzu auch weiter unten). Wird eine Wickelfolie 6 zur Umwicklung der Harz-Träger-Lage 3 mit einer teilweisen Überlappung der Wickellagen verwendet, so kann diese Wickelfolie 6 bevorzugt auch beidseitig mit einem Vlies 5 versehen sein.

Die Schlauchinnenfolie 2, die vorzugsweise zumindest in einer Schicht ein Olefin-Homo- oder -Copolymer enthält, ist prinzipiell aus dem Stand der Technik bekannt, wobei diverse Ausführungen existieren. Sie kann verschiedene Schichten enthalten, wobei insbesondere eine Durchlässigkeit für UV-Strahlung gegeben ist, um eine UV-Strahlungsquelle durch den von der Schlauchinnenfolie 2 gebildeten Hohlraum in Längsrichtung des Schlauchliners 1 zu führen und hierdurch das reaktive, durch UV-Strahlung aushärtbare Harz 3b zu härten. Die Innenfolie 2 kann nach Aufstellen und Aushärten des Schlauchliners 1 im zu sanierenden Kanal abgezogen und aus dem Kanal entfernt werden oder als Teil des Schlauchliners 1 im Kanal verbleiben, falls sich diese mit dem Harz-Trägersystem 3 verbinden kann.

Als Trägermaterial 3a der Harz-Träger-Lage 3 sind beispielsweise generell Glasfasern verwendbar. Als reaktive Harze 3b kommen insbesondere UVreaktive Kunststoffharze in Frage, die der Fachmann aus dem Kanalsanierungsbereich kennt.

Die Schutz- oder Wickelfolie 6, vorzugsweise mitsamt aufkaschiertem Vlies 5, kann in Längsrichtung des Schlauchliners 1 (also in die Blattebene hinein) schraubenförmig um die Harz-Träger-Lage 3 gewickelt sein. Alternativ ist die Harz-Träger-Lage 3 in Längsrichtung des Schlauchliners 1 (also in die Blattebene hinein) mit einer Schutz- bzw. Verkleidungsfolie 6 und vorzugsweise einem auf die Schutzfolie 6 aufkaschiertem Vlies 5 vollständig umhüllt, wobei dieser Verbund aus Schutzfolie 6 und Vlies 5 mit einer Längsnaht (in Längsrichtung des Schlauchliners 1 verlaufend) verschlossen ist. Hierbei kann die Vlies-Seite gegen die Folienseite des besagten Verbundes gesiegelt werden.

Die Schutz- oder Wickelfolie 6 kann ein- oder mehrschichtig sein und auf mindestens einem Homo- oder Copolymer basieren, beispielsweise einem Polyethylen oder Polypropylen. Vorzugsweise ist eine Polyamidschicht in der Schutz- oder Wickelfolie 6 enthalten.

Die Schutz- oder Wickelfolie 6 kann zum Beispiel durch Beschichtung eines Nonwovens bzw. eines Vlies mit einem oder mehreren Polymeren (letztere geschichtet, d.h. nacheinander in Form von Schichten aufgetragen) erhalten werden. Dies gelingt etwa durch Extrusionsbeschichtung.

Wie erwähnt, ist gemäß der Fig. 1 die Schutz- oder Wickelfolie 6 auf ihrer zur Harz-Träger-Lage 3 gerichteten Seite mit einem textilen Vlies 5 kaschiert. Das Vlies 5 erleichtert die Anhaftung an das Harz 3b und an das mit dem Harz 3b getränkte Trägersystem 3a und sorgt für das Austreiben überschüssiger Luft und somit für weitere Stabilität des Schlauchliners 1. Die Schutz- oder Wickelfolie 6 kann insbesondere eine oder mehrere Barriereschichten, insbesondere ein Polyamid enthaltend, aufweisen, um aus dem Harz 3b stammendes Styrol am Entweichen aus der Harz-Träger-Lage 3 zu hindern. Auch können weitere Barriere-Chemikalien in der ein- oder mehrschichtigen Wickelfolie 6 enthalten sein, beispielsweise EVOH.

Um die Schutz- oder Wickelfolie 6 herum ist ein Außenfoliensystem 7 angeordnet, das vorliegend eine untere Außenfolie 8a, eine obere Außenfolie 8b sowie eine Verstärkungsbahn 9 umfasst. Die untere Außenfolie 8a erstreckt sich entsprechend der Querschnittansicht in einem Winkelbereich von ca. 190°, während die obere Außenfolie 8b sich über ca. 170° erstreckt. Die jeweiligen Längsränder 18a, 18b der beiden Außenfolien 8a, 8b stehen jeweils nach außen ab und liegen mit ihren Innenseiten aneinander an. Diese sich überlappenden Längsränder 18a, 18b können miteinander versiegelt werden und bilden dann je eine Verbindungsstelle 15. Dies ist beispielsweise ohne Weiteres möglich, wenn die miteinander zu versiegelnden Schichten beispielsweise ein Olefin-Homo- oder -Copolymer, beispielsweise ein Polyethylen, enthalten, ggf. mehr als zu 50 Gew.-%. Die sich überlappenden Längsränder 18a, 18b werden - nach Versiegelung - vorzugsweise umgebogen und an die obere Außenfolie 8b angelegt (s. Pfeil f1) und optional mit dieser verklebt. Auch ein Umbiegen in die andere Richtung mit optionalem Ankleben ist möglich.

Die beiden Außenfolien 8a, 8b sind in Form von durchscheinenden, UV-Strahlung und kurzwelliges, sichtbares Licht absorbierenden und/oder reflektierenden, einschichtigen oder mehrschichtigen Folien ausgebildet. Diese umfassen vorzugsweise jeweils mindestens eine Schicht basierend auf mindestens einem, gegebenenfalls modifizierten, thermoplastischen Olefin-Homo- oder Copolymeren, wobei diese Schicht bzw. mehrere Schichten in der gesamten Folie eine Kombination aus wenigstens einem kurzwelliges, sichtbares Licht absorbierenden und/oder reflektierenden, organischen oder anorganischen Farbpigment oder Farbstoff, und aus wenigstens einer die UV-Strahlung absorbierenden und/oder reflektierenden, organischen oder anorganischen Verbindung umfasst bzw. umfassen. Mit anderen Worten verhindern die Außenfolien 8a, 8b den Durchtritt von UV-Strahlung und kurzwelligem, sichtbarem Licht, damit das Harz 3b bei Lagerung des Schlauchliners 1 nicht vorzeitig aushärtet. Andererseits sind die Außenfolien 8a, 8b derart ausgebildet, dass sie derart durchscheinend ausgebildet sind, dass das Außenfoliensystem eine Transmission von mindestens 1% für sichtbares Licht bei mindestens einer Wellenlänge im Bereich von 550 nm bis 800 nm aufweist.

Auf der unteren Außenfolie 8a ist von außen her eine Verstärkungsbahn 9 aufgebracht, die - im Querschnitt gesehen - vorliegend bis unter die Knicckanten der unteren Außenfolie 8a heranreicht, an denen die Längsränder 18a abstehen. Diese Ausführung bietet sich insbesondere dann an, wenn die Verstärkungsbahn 9 erst nach dem Verschließen des übrigen Schlauchliners 1 durch Anlegen und Versiegeln der beiden Außenfolien 8a, 8b an die untere Außenfolie 8a angeklebt wird.

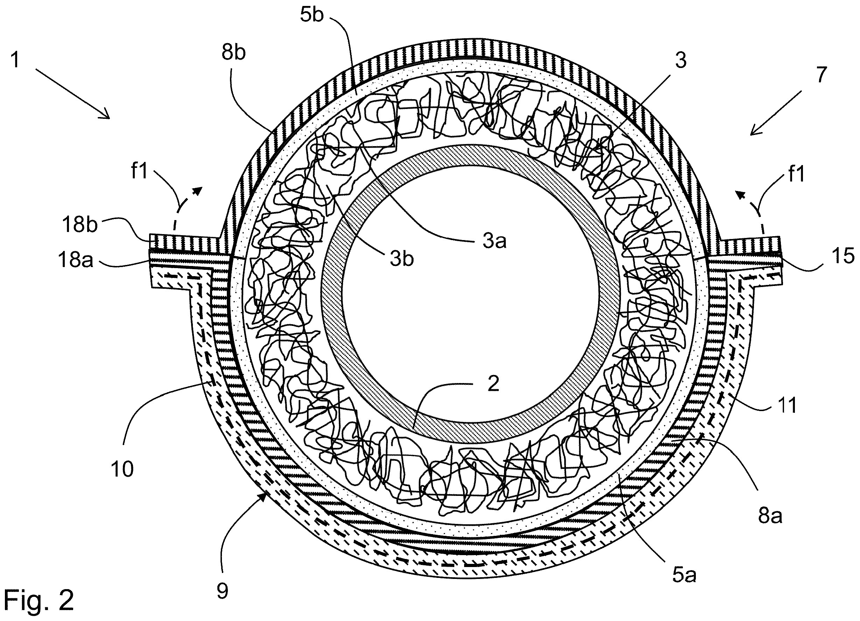

Gemäß einer nicht dargestellten Alternative schließt die Verstärkungsbahn 9 mit der unteren Außenfolie 8a ab, ist also an ihren Längsrändern senkrecht vom Rest des Schlauchliners 1 weggebogen. Es wird dann bei der Siegelung der Längsränder 18a, 18b durch die Verstärkungsbahn hindurchgesiegelt, was technisch ohne Weiteres möglich ist (s. hierzu die Fig. 2, die eine solche Ausführung - allerdings ohne Schutz- oder Wickelfolie 6 - zeigt).

Die Verstärkungsbahn 9 umfasst vorliegend ein Gewebe 10, das mit einer Polymer-Beschichtung 11 versehen ist. Das Gewebe 10 ist beispielsweise aus einem Polyestergarn mit einer Garnstärke von mehr als 1000 dtex hergestellt. Die Maschenweite in beiden Richtungen (md und cd) liegt vorzugsweise unterhalb von 5 mm, beispielsweise bei 3 mm. Das Gewebe 10 weist vorliegend beidseitig die besagte Beschichtung 11 auf, wobei gemäß einer bevorzugten Ausführungsform die zur Außenfolie 8a gerichtete Beschichtung 11 als Kleber wirkt, um mit Hilfe dieser Klebeeigenschaften die Verstärkungsbahn 9 auf die untere Außenfolie 8a zu kleben. Die Polymer-Beschichtung 11 ist beispielsweise 200 µm dick. Ist die untere Außenfolie 8a beispielsweise ebenfalls 200 µm dick, ergibt sich somit eine Dicke des Außenfoliensystems 7 im Bereich der Verstärkungsbahn 9 von ca. 460 µm.

Die Verstärkungsbahn 9 ist mechanisch stabil ausgebildet, insbesondere entsprechend den Merkmalen des Anspruchs 2, und verleiht somit dem Schlauchliner 1 in dem verstärkten Bereich eine große Widerstandsfähigkeit. Insbesondere beim Einziehen in einen zu sanierenden Kanal gleitet der Schlauchliner 1 über die oft unebene oder sogar teilweise scharfkantige Kanalsohle. Durch die mechanische Widerstandsfähigkeit wird ein Einreißen der Verstärkungsbahn 9 und damit der darunter liegenden Schichten vermieden.

Vorzugsweise beträgt der Reibungskoeffizient (COF, coefficient of friction) der zur Kanalwand gerichteten Außenseite der Verstärkungsbahn 9, gemessen gegen die Außenseite einer identischen Verstärkungsbahn, weniger als 1,5, bevorzugt weniger als 1,0 und am meisten bevorzugt weniger als 0,7. Ein solcher niedriger Reibungskoeffizient erleichtert das gleitende Einziehen des Schlauchliners 1, der mit der Verstärkungsbahn 9 auf der Kanalsohle rutscht. Diese Reibungseigenschaften gelten vorzugsweise auch für die nachfolgenden Ausführungsbeispiele und bevorzugt allgemein für das erfindungsgemäße Außenfoliensystem 7. Der Fachmann ist mit der Messung der Reib- und Gleiteigenschaften und der Messung des Reibungskoeffizienten von Folien bzw. Folienoberflächen und anderen flachen Materialien bestens vertraut.

Die Verstärkungsbahn 9 ist erfindungsgemäß durchscheinend ausgebildet, wobei hier das Kriterium ist, dass das gesamte Außenfoliensystem 7 eine Transmission von mindestens 1% für sichtbares Licht bei mindestens einer Wellenlänge im Wellenlängenbereich von 550 nm bis 800 nm aufweist. Hierzu sind die Polymerbeschichtung und ebenso das Gewebe durchscheinend, wobei beim letzteren das Hindurchsehen aufgrund der Maschenöffnungen ermöglicht wird.

Es gilt generell, dass sich die Transmissionsgrade der einzelnen hintereinander angeordneten Bestandteile, vorliegend also der Verstärkungsbahn 9 (Gewebe 10 und Polymerbeschichtung 11) und der Außenfolie 8 (hier: 8a und 8b), zu einem Gesamt-Transmissionsgrad für das Außenfoliensystem 7 multiplizieren. Daher sind die Transmissionsgrade der genannten Bestandteile (selbstverständlich in Abstimmung mit deren Dicke) so zu wählen, dass der Transmissionsgrad des Außenfoliensystems 7 für sichtbares Licht bei zumindest einer Wellenlänge im Wellenlängenbereich von 550 nm bis 800 nm mindestens 1% beträgt, vorzugsweise mindestens 3% und besonders bevorzugt mindestens 5%. Der Einfallswinkel der Lichtwellen ist hierbei senkrecht zur Oberfläche des Außenfoliensystems definiert.

Im Rahmen dieser Erfindung wird bei Erfüllung des oben genannten Kriteriums eines Transmissionsgrads von mindestens 1% der Begriff "durchscheinend" für das Außenfoliensystem und die Eigenschaft der "Durchscheinung" seitens des Außenfoliensystems verwendet.

Insgesamt ist somit das erfindungsgemäße Außenfoliensystem 7 durchscheinend ausgebildet. Diese erfindungsgemäße Ausgestaltung des Außenfoliensystems 7 ermöglicht es, dass Licht von innen oder außen durch den ausgehärteten Schlauchliner 1 hindurch gestrahlt wird (Durchscheinung) und dann mittels einer auf der anderen Seite des Schlauchliners angeordneten Kamera aufgrund der hindurchgelassenen Strahlung erkannt werden kann, wo eine Verzweigung, ein Zulauf oder ein Ablauf vom zu sanierenden Kanal vorhanden ist. Ggf. kann die Kamera auch neben der Lichtquelle angeordnet werden, um anhand einer unterschiedlichen Reflektion im Vergleich zu benachbarten Schlauchliner-Abschnitten auf die Anwesenheit einer Abzweigung zu schließen. Anschließend kann dann ein Roboter an diese Stelle gefahren werden, der eine entsprechende Aussparung in den Schlauchliner fräst, damit eine Verbindung vom Inneren des sanierten, vom Schlauchliner ausgekleideten Kanals zu dieser Abzweigung hergestellt werden kann.

Die übrigen Bestandteile des Schlauchliners 1, also die ggf. vorhandene Schutz- oder Wickelfolie 6, das im eingebauten Zustand des Schlauchliners mit Harz getränkte Vlies 5, die Harz-Träger-Lage 3 sowie die Innenfolie 2, weisen einen - üblicherweise erheblich - größeren Transmissionsgrad auf als das Außenfoliensystem 7, so dass das Außenfoliensystem 7 das entscheidende Element hinsichtlich der Gesamttransmission des Schlauchliners 1 ist.

Die Außenfolien 8a, 8b sind im Vergleich zur Verstärkungsbahn 9 dehnbar, so dass beim Aufstellen des Schlauchliners 1 im zu sanierenden Kanal sich die obere Außenfolie 8b - im Gegensatz zu der durch die Verstärkungsbahn 9 in ihrer Ausdehnung gehemmten unteren Außenfolie 8a - ausdehnen und an die obere Kanalwand anlegen kann.

Wenn die Polymer-Beschichtung 11 - zumindest an einer Seite - klebend ausgerüstet ist, kann das beschichtete Gewebe 10 auf die zuvor produzierte Anordnung von Innenfolie 2, Harz-Träger-Lage 3, Schutz- oder Wickelfolie 6 sowie Außenfolien 8a, 8b von außen auf die besagte Außenfolie 8a aufgeklebt werden.

Die vorbeschriebenen Merkmale gelten auch für die nachfolgenden Ausführungsbeispiele, soweit nichts anderes beschrieben ist. Zudem werden gleiche Bezugszeichen für gleiche oder vergleichbare Strukturmerkmale verwendet.

Das zweite Ausführungsbeispiel eines Schlauchliners 1 mit einem durchscheinenden Außenfoliensystem 7 gemäß der Fig. 2 unterscheidet sich von demjenigen der Fig. 1 darin, dass hier keine Schutz- oder Wickelfolie 6 vorgesehen ist, sondern zwei Vliesabschnitte 5a, 5b direkt auf die jeweilige Innenseite der Außenfolien 8a bzw. 8b aufgebracht sind, vorzugsweise mittels eines Klebers oder eines Polymers (Extrusionskaschierung). Weiterhin schließen bei diesem Ausführungsbeispiel die Längsränder der Verstärkungsbahn 9 mit den Längsrändern 18a der unteren Außenfolie 8a ab, wobei bei der Siegelung der Längsränder 18a, 18b durch die Verstärkungsbahn 9 gesiegelt wird. Bei einer nicht dargestellten Alternative reichen die Längsränder der Verstärkungsbahn 9 bis unterhalb der Längsränder 18a der unteren Außenfolie 8a (analog zur Fig. 1)

Bei einer weiteren nicht dargestellten Variante, liegt eines oder liegen beide Vliese 5a, 5b an der jeweiligen Innenseite der unteren bzw. oberen Außenfolie 8a, 8b flächengleich (flächendeckend) an, so dass die Längsränder eines oder beider Vliese 5a, 5b zwischen den beiden Längsrändern 18a, 18b liegen. Im letzteren Falle wird Vlies 5a gegen Vlies 5b gesiegelt, was insbesondere dann ohne Weiteres möglich ist, wenn die Vliese 5a, 5b aus siegelfähigem LDPE oder LLDPE besteht.

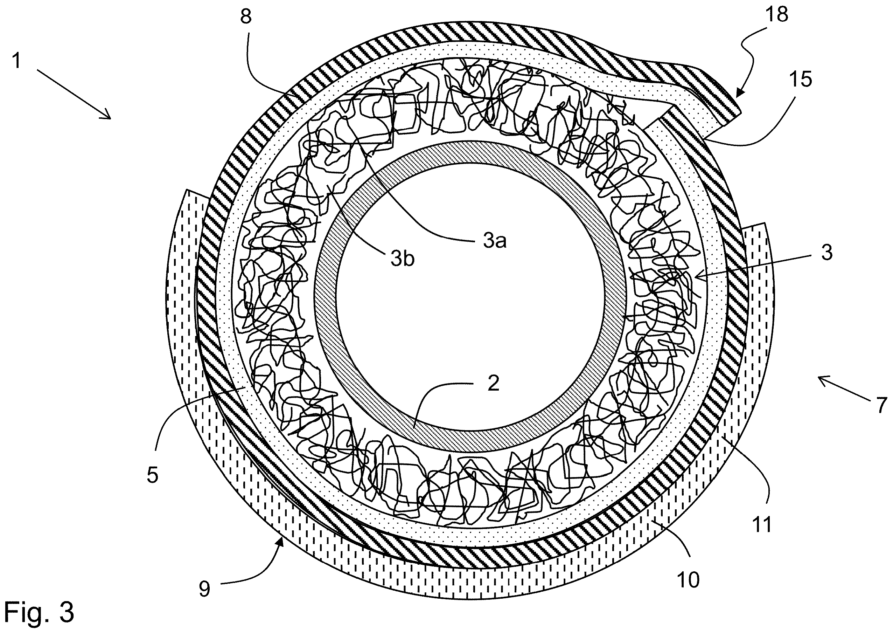

Beim dritten Ausführungsbeispiel eines Schlauchliners 1 mit einem durchscheinenden Außenfoliensystem 7 gemäß der Fig. 3 ist lediglich eine einzige Außenfolie 8 vorgesehen, auf deren Innenseite im Wesentlichen flächengleich bzw. flächendeckend ein Vlies 5 aufgebracht ist, so dass im Bereich der Längsränder 18 die Unterseite des Vlieses 5 auf der Oberseite der darunter angeordneten Außenfolie 8 anliegt, wobei hier Vlies 5 und Außenfolie 8 an einer Verbindungsstelle 15 miteinander gesiegelt werden können. Weiterhin kann - wie in Fig. 1 - eine Schutzfolie vorgesehen sein (nicht dargestellt), die zwischen Außenfolie 8 und Vlies 5 angeordnet ist.

Bei einer nicht dargestellten Ausführungsform umgibt das Vlies 5 die Harz-Träger-Lage 3 vollumfänglich um 360°, während die Außenfolie 8 die Harz-Träger-Lage 3 nicht nur rundum umschließt, sondern zusätzlich einen Überlappungsbereich aufweist, in dem der überlappende obere Abschnitt der Außenfolie 8 auf ihren darunterliegenden Abschnitt gelegt und beide dort beispielsweise miteinander versiegelt sind. Auch bei dieser Ausführungsform gelangt somit kein UV-Licht und kein kurzwelliges Licht zum Harz 3b, sodass dieses nicht vorzeitig aushärten kann.

Bei einer weiteren nicht dargestellten Ausführungsform sind die beiden sich gegenüberliegenden Innenseiten der dann abstehenden Längsränder des Vlieses 5 miteinander verschweißt, um dann das so verschweißte Ende an den Schlauchliner 1 anzuklappen (vgl. Fig. 1).

Die Verstärkungsbahn 9 ist gemäß der Fig. 3 in einem Umfangswinkel von ca. 210° um die Unterseite der Außenfolie 8 angeordnet. Sie ist weiterhin nicht als beschichtetes Gewebe 10 ausgebildet (wobei auch diese Ausführung ohne Weiteres möglich wäre), sondern vorliegend als durchgehende mechanisch stabile Folie ausgebildet, welche zudem durchscheinend ausgebildet ist, so dass das Außenfoliensystem den geforderten Transmissionsgrad aufweist. Als geeignetes Material für die Verstärkungsbahn 9 kommt beispielsweise transparentes Polyester in Frage.

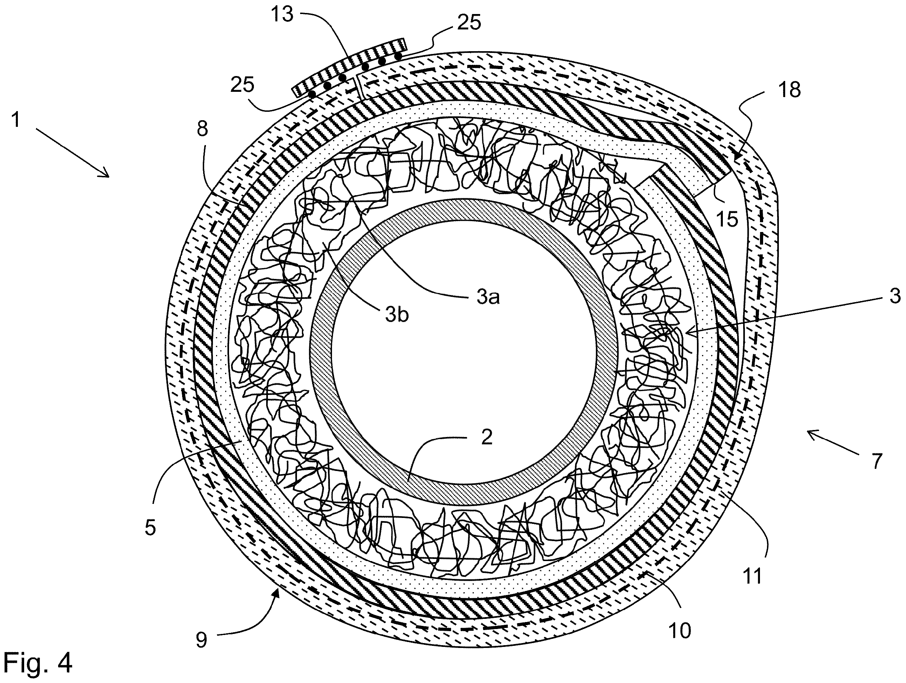

Bei dem vierten Ausführungsbeispiel eines Schlauchliners 1 mit einem durchscheinenden Außenfoliensystem 7 gemäß der Fig. 4 ist insbesondere die Verstärkungsbahn 9 gegenüber dem Ausführungsbeispiel der Fig. 3 verschieden. Zum einen ist hier ein Gewebe 10 mit einer beidseitigen Beschichtung 11 als Verstärkungsbahn 9 vorgesehen, zum anderen läuft diese Verstärkungsbahn 9 um den gesamten Umfang des Schlauchliners 1. Die Stirnseiten der Verstärkungsbahn 9 liegen sich direkt gegenüber, wobei bei diesem Ausführungsbeispiel ein in Längsrichtung des Schlauchliners 1 verlaufender schmaler Dichtstreifen 13 aus stabilem Kunststoff über die stirnseitigen Stoßkanten der Verstärkungsbahn 9 geklebt wird, wobei klebende Verbindungsstellen 25 vorgesehen sind, die sich dehnen oder sogar als Sollbruchstelle dienen können, damit sich der Schlauchliner 1 beim Aufblasen aufdehnen kann.

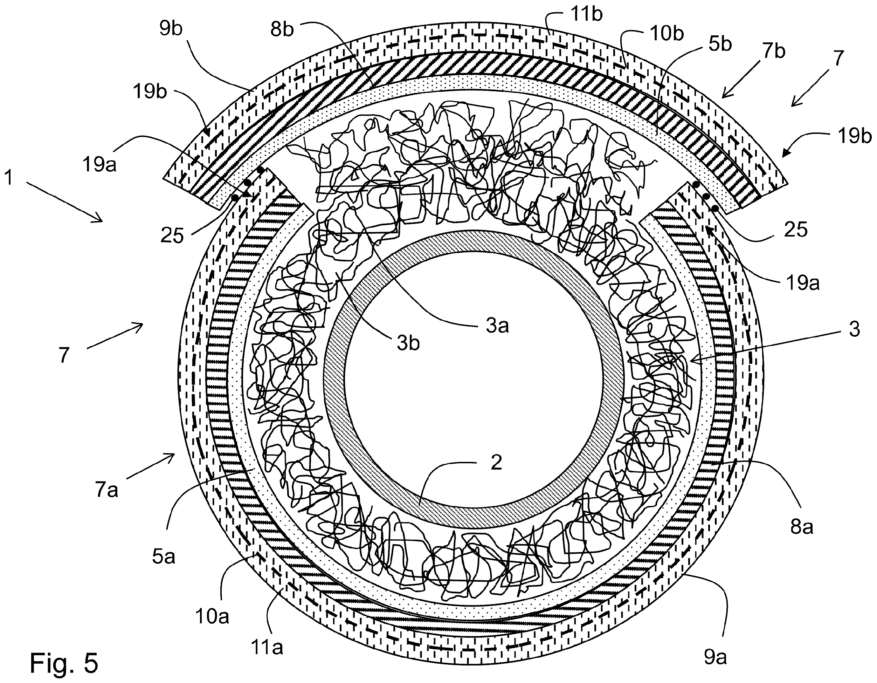

Gemäß dem fünften Ausführungsbeispiel der Fig. 5 ist das durchscheinende Außenfoliensystem 7 zweiteilig ausgebildet. Auf ein unteres System 7a mit einem unteren Vlies 5a, einer unteren Außenfolie 8a und einer unteren Verstärkungsbahn 9a, die alle im Wesentlichen deckungsgleich übereinander angeordnet und miteinander verbunden sind, ist ein oberes System 7b aufgesetzt. Während das untere System 7a sich über einen Winkelbereich von ca. 270° erstreckt, wölbt sich das obere System mit ca. 120° über das untere System 7b. Das obere System 7b umfasst ein oberes Vlies 5b, eine obere Außenfolie 8b sowie eine obere Verstärkungsbahn 9b auf, die allesamt flächengleich bzw. flächendeckend ausgeführt sind. Hierbei sind die freien Längsränder des Vlieses 5b mit den darunter liegenden Abschnitten der Außenseite der unteren Verstärkungsbahn 9a an Verbindungsstellen 25 verbunden. In der Fig. 5 sind beispielhaft jeweils drei sich in die Bildebene hinein erstreckende Längsklebenähte als Beispiel für diese Verbindungsstellen 25 dargestellt. Wie der Fig. 5 weiter zu entnehmen ist, decken die beiden Außenfolien 8a, 8b den gesamten Umfang des Schlauchliners 1 ab, so dass das Harz 3b nicht vorzeitig austrocknen kann.

Die Verstärkungsbahnen 9a, 9b umfassen vorliegend wieder jeweils ein Gewebe 10a bzw. 10b, das von einer Polymerbeschichtung 11a bzw. 11b umhüllt ist. Es ist auch eine Ausführung der Verstärkungsbahnen 9a, 9b als vollflächige Folien (ohne Gewebe) möglich (vgl. Fig. 3).

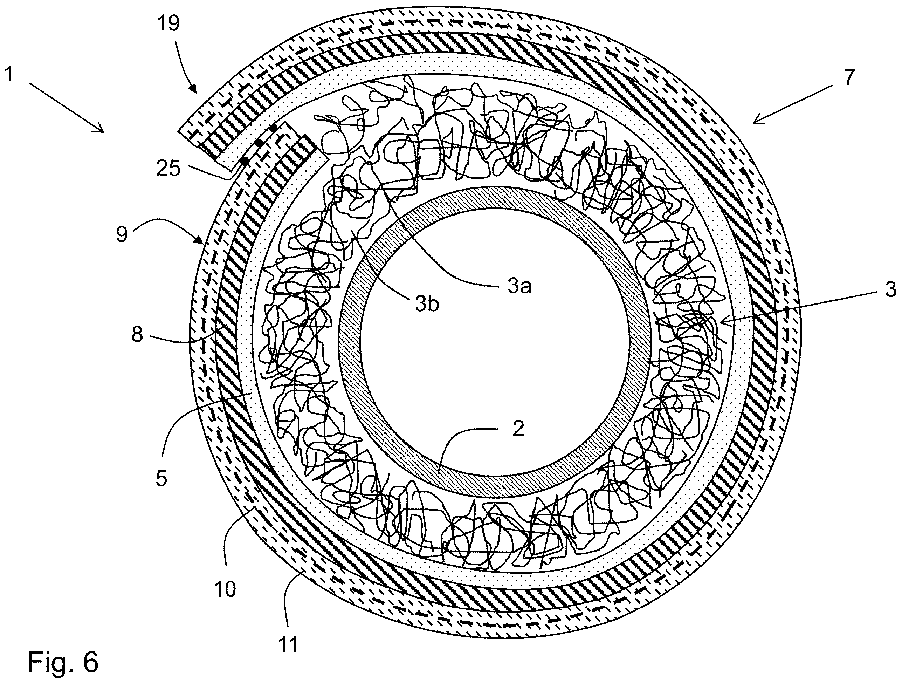

Zum Herstellen der besagten Verbindungstellen 25 in Fig. 4 und 5 (und auch in Fig. 6, s. unten) können unterschiedlichste Klebetechniken angewendet werden, beispielsweise doppelseitiges Klebeband. Wichtig ist, dass sich die Verstärkungsbahn 9 aufweiten kann bzw. sich die Verstärkungsbahnen 9a, 9b gegeneinander verschieben können, wenn der Schlauchliner 1 aufgeblasen wird (im Anschluss an das Einbringen in den zu sanierenden Kanal im druckluftlosen Zustand), d.h. dass die Verbindungsstellen 25 sich dehnen und ggf. brechen können. Die Verbindungsstellen 25 wirken dann als Sollbruchstellen.

Die Dehnung in Umfangsrichtung des Schlauchliners 1 (bei Aufbringen von radialem Druck von innen her bei seinem Aufrichten), welche durch die Verbindungsstellen 25 realisiert wird, ist hilfreich, da die Dehnung der Verstärkungsbahnen 9a, 9b selbst gering oder sogar nicht vorhanden ist. Durch diese Dehnung kann sich der Schlauchliner 1 in Umfangsrichtung beim Aufblasen ausdehnen und sich auch in seinem oberen Bereich an die Kanalwand anlegen, wodurch ein sicherer Halt und ein größerer Durchflussquerschnitt erreicht wird.

Zur Überlappung können die Längsränder 19a der unteren Verstärkungsbahn 9a auch oberhalb der Längsränder 19b der oberen Verstärkungsbahn 9b angeordnet werden. Auch ist es möglich, dass einer der beiden Längsränder 19a der unteren Verstärkungsbahn 9a oberhalb und der andere Längsrand 19a der unteren Verstärkungsbahn 9a unterhalb des jeweiligen Längsrandes 19b der oberen Verstärkungsbahn 9b liegt.

In der Fig. 6 ist schließlich ein sechstes Ausführungsbeispiel eines erfindungsgemäßen Schlauchliners 1 mit einem erfindungsgemäß durchscheinenden Außenfoliensystem 7 dargestellt. Hierbei umfasst das Außenfoliensystem 7 lediglich eine einzige Außenfolie 8 und eine einzige Verstärkungsbahn 9, die beide flächendeckend (auch manchmal als koextensiv bezeichnet) angeordnet sind, wobei die Längsränder 19 des Außenfoliensystems 7 sich in Umfangsrichtung überdecken bzw. überlappen. Durch diese Anordnung ist sichergestellt, dass das Außenfoliensystem 7 UV-Licht-, harz- und luftdicht ist. Auch hier sind - wieder beispielhaft - drei senkrecht zur Bildebene und sich längs des Schlauchliners 1 erstreckende, bei radialer Dehnung des Schlauchliners 1 sich in Umfangsrichtung dehnende und schließlich möglicherweise brechende Klebenähte vorgesehen, welche Verbindungsstellen 25 bilden. Die Verbindungsstellen 25 sind vorliegend im überlappenden Bereich zwischen der Unterseite des überstehenden Vlieses 5 und der Oberseite des direkt darunter befindlichen Abschnitts der Verstärkungsbahn 9 vorgesehen. Es ist hier wie auch bei den zuvor im Zusammenhang mit den Fig. 4 und 5 beschriebenen Ausführungsbeispielen unerheblich, wie die Verbindungsstellen 25 geometrisch genau ausgestaltet sind; beispielsweise sind auch flächige Verbindungsstellen 25 möglich.

Wie der Fig. 6 weiter zu entnehmen ist, ist auf der Innenseite der Außenfolie 8 wiederum ein Vlies 5 kaschiert, das zur Anhaftung durch das Harz 3b dient.

Die Erfindung wurde anhand von verschiedenen Ausführungsbeispielen näher erläutert. In einigen dieser Ausführungsbeispiele ist die Verstärkungsbahn bzw. sind die Verstärkungsbahnen als Gewebe mit einer Polymer-Beschichtung (einseitig oder zweiseitig), vorzugsweise auch mit einer klebenden Ausrüstung, ausgebildet (wobei diese Polymerbeschichtung auf den beiden Oberflächen gleich oder verschieden sein kann), in anderen als vollflächige Folie (ohne eingelegtes Gewebe). Es ist ohne Weiteres möglich, die eine Art Verstärkungsbahn gegen die andere Art Verstärkungsbahn zu ersetzen. Weiterhin ist es möglich, dass die mindestens eine Verstärkungsbahn und die mindestens eine Außenfolie klebend miteinander verbunden sind, oder dass beide lose und unverbunden aneinander anliegen. Bei einer Verbindung von Außenfolie(n) und Verstärkungsbahn(en) kann beispielsweise erst ein herkömmlicher Liner mit Innenfolie, Harz-Träger-Lage und Außenfolie hergestellt werden, um dann die Verstärkungsbahn aufzubringen. Dies ist insbesondere dann leicht realisierbar, wenn die Verstärkungsbahn klebend ausgerüstet ist, insbesondere in Form einer entsprechenden Polymer-Beschichtung auf einem Gewebe. Nach Ankleben der Verstärkungsbahn(en) kann der Schlauchliner dann in einen Kanal eingezogen werden. Diese Methode hat den Vorteil, dass ein Siegeln der Außenfolie(n) einfach möglich ist, da keine Verstärkungsbahn(en) hierbei hinderlich ist (sind).

Wird das Außenfoliensystem, umfassend mindestens eine Außenfolie und eine Verstärkungsbahn, zunächst eigenständig als eigene, miteinander verbundene Einheit produziert, bietet es sich an, dieses Außenfoliensystem zur Siegelung, d.h. zum Schließen, des Schlauchliners zu verwenden. Hier kennt der Fachmann die verschiedenen Siegeltechniken (z.B. Impuls-, Kontakt-, Hochfrequenz-, Ultraschallsiegelung oder -verschweißung).

Hierbei kann beispielsweise der Verbund bzw. das Außenfoliensystem aus der mindestens einen Außenfolie und der mindestens einen Verstärkungsbahn (beispielsweise in Form einer unteren Halbschale, die kaum oder nicht dehnbar ist) mit einer weiteren Außenfolie (vorzugsweise dann in Form einer oberen Halbschale, die verhältnismäßig gut dehnbar ist), an der keine Verstärkungsbahn anliegt, gesiegelt werden. Diese Ausführung ist mit denjenigen der Fig. 1 und 2 vergleichbar.

Letztlich ist es auch denkbar, dass kein Vlies verwendet wird, sondern die Harz-Träger-Lage auch ohne ein solches Vlies im Schlauchliner angeordnet wird.

## Patentansprüche

1. Schlauchliner (1) für die Sanierung eines insbesondere unterirdisch verlegten Kanals, mit mindestens:
- einer sich in Längsrichtung des Schlauchliners (1) erstreckenden Schlauchinnenfolie (2);
- mit einer sich in Längsrichtung des Schlauchliners (1) erstreckenden und die Schlauchinnenfolie (2) umgebenden Harz-Träger-Lage (3), wobei deren Harz (3b) mittels UV-Strahlung aushärtbar ist;
- mit einem die Harz-Träger-Lage (3) umgebenden, mechanisch schützenden Außenfoliensystem (7), das sich in Längsrichtung des Schlauchliners (1) erstreckt,
- wobei das Außenfoliensystem (7) mindestens eine Außenfolie (8; 8a, 8b) in Form einer UV-Strahlung und kurzwelliges, sichtbares Licht absorbierenden und/oder reflektierenden, einschichtigen oder mehrschichtigen Folie umfasst, die in einer oder mehreren Polymerschichten mindestens ein kurzwelliges, sichtbares Licht absorbierendes und/oder reflektierendes organisches oder anorganisches Farbpigment oder einen entsprechenden Farbstoff, und mindestens eine die UV-Strahlung absorbierende und/oder reflektierende, organische oder anorganische Verbindung enthält,
- wobei das Außenfoliensystem (7) weiterhin mindestens eine mechanisch stabile Verstärkungsbahn (9; 9a, 9b) umfasst, die an der besagten Außenfolie (8; 8a, 8b) anliegt, wobei die mindestens eine Außenfolie (8; 8a, 8b) zur Harz-Träger-Lage (3) und die mindestens eine Verstärkungsbahn (9; 9a, 9b) in der Einbausituation des Schlauchliners (1) zur Kanalwand gerichtet ist, und
wobei das Außenfoliensystem (7) einen Transmissionsgrad für sichtbares Licht bei mindestens einer Wellenlänge im Bereich von 550 nm bis 800 nm von mindestens 1% aufweist,
wobei die mindestens eine Verstärkungsbahn (9; 9a, 9b) ein Gewebe (10) umfasst, das vorzugsweise überwiegend oder vollständig aus Polyester besteht, wobei das Gewebe (10) eine Maschenweite in md-Richtung und/oder in cd-Richtung von kleiner als 2 cm, bevorzugt kleiner als 1 cm, am meisten bevorzugt kleiner als 5 mm aufweist,
wobei die md-Richtung die Maschinenrichtung ist, das heißt die Herstellungslaufrichtung und wobei die cd-Richtung die Querrichtung ist.

2. Schlauchliner (1) nach Anspruch 1, **dadurch gekennzeichnet, dass** die mindestens eine Verstärkungsbahn (9; 9a, 9b) eine oder mehrere der folgenden mechanischen Eigenschaften aufweist:
a) ihre Zugfestigkeit längs M gemäß DIN EN ISO 527-3 ist größer 20 N/mm², bevorzugt größer 30 N/mm2, am meisten bevorzugt größer 40 N/mm²;
b) ihre Zugfestigkeit quer M gemäß DIN EN ISO 527-3 ist größer 20 N/mm², bevorzugt größer 30 N/mm², am meisten bevorzugt größer 40 N/mm²;
c) ihre Zugfestigkeit nach DIN EN ISO 1421 ist größer als 200 N/5cm, bevorzugt größer als 400 N/5cm, besonders bevorzugt größer als 600 N/5cm, beispielsweise größer als 800 N/5cm, am meisten bevorzugt größer als 1000 N/5cm;
d) ihre Reiß- oder Bruchdehnung längs (εB) und Reiß- oder Bruchdehnung quer (εB) gemäß DIN EN ISO 527-3 bzw. DIN EN ISO 527-3 ist kleiner 200 %, bevorzugt kleiner 100 %, am meisten bevorzugt kleiner 50 %;
e) ihre Weiterreißfestigkeit Trapez längs bzw. Trapez quer gemäß DIN 53363 bzw. DIN 53363 ist größer 100 N, bevorzugt größer 200 N; und/oder
f) ihre Durchstoßfestigkeit gemäß ASTM E 154 ist größer 300 N, bevorzugt größer 500 N, besonders bevorzugt größer 800 N.

3. Schlauchliner (1) nach Anspruch 1 oder 2, **dadurch gekennzeichnet, dass** das Außenfoliensystem (7) einen Transmissionsgrad für sichtbares Licht bei mindestens einer Wellenlänge im Bereich von 550 nm bis 800 nm von mindestens 3% aufweist, vorzugsweise von mindestens 5%.

4. Schlauchliner (1) nach mindestens einem der vorhergehenden Ansprüche, **dadurch gekennzeichnet, dass** das Gewebe (10) mindestens auf einer Seite mit einer Polymer-Beschichtung (11) versehen ist, vorzugsweise auf beiden Seiten mit jeweils einer Polymerbeschichtung, die gleich oder verschieden sein können und das Gewebe (10) vorzugsweise von beiden Seiten umhüllen, wobei das Polymer der Polymerbeschichtung bzw. mindestens ein Polymer der Polymerbeschichtungen vorzugsweise klebend ausgebildet ist zum Verkleben des beschichteten Gewebes (10) mit der mindestens einen Außenfolie (8; 8a, 8b).

5. Schlauchliner (1) nach mindestens einem der vorhergehenden Ansprüche, **dadurch gekennzeichnet, dass** die mindestens eine Außenfolie (8; 8a, 8b) und die mindestens eine Verstärkungsbahn (9; 9a, 9b) miteinander verbunden sind, vorzugsweise verklebt und bevorzugt über ihre gesamten aneinander anliegenden Flächen.

6. Schlauchliner (1) nach mindestens einem der Ansprüche 1 bis 4, **dadurch gekennzeichnet, dass** die mindestens eine Außenfolie (8; 8a, 8b) lose und unverbunden an der mindestens einen Verstärkungsbahn (9; 9a, 9b) anliegt.

7. Schlauchliner (1) nach mindestens einem der vorhergehenden Ansprüche, **dadurch gekennzeichnet, dass** das Außenfoliensystem (7) mindestens eine, vorzugsweise in Längsrichtung des Schlauchliners (1) verlaufende, Verbindungsstelle (15; 25) aufweist, wobei die mindestens eine Verbindungsstelle angeordnet ist:
- zwischen den beiden Längsrändern (18) einer besagten Außenfolie (8), oder
- zwischen den Längsrändern (18a, 18b) von zwei oder mehr besagten Außenfolien (8a, 8b), oder
- zwischen den beiden Längsrändern (19) einer besagten Verstärkungsbahn (9), oder
- zwischen den Längsrändern (19a, 19b) von zwei oder mehr besagten Verstärkungsbahnen (9a, 9b).

8. Schlauchliner (1) nach dem vorhergehenden Anspruch, **dadurch gekennzeichnet, dass** die mindestens eine Verbindungsstelle (15; 25), vorzugsweise in Längsrichtung des Schlauchliners (1), mittels eines ggf. doppelseitigen Klebebands, einer thermischen Schweißnaht, eines Hotmelt-Klebers oder eines sonstigen Klebers in Form einer durchgehenden Klebenaht bzw. Siegelnaht oder eines unterbrochenen Kleberauftrags miteinander verbunden ist.

9. Schlauchliner (1) nach mindestens einem der vorhergehenden Ansprüche, **dadurch gekennzeichnet, dass** das organische oder anorganische Farbpigment oder der Farbstoff in der Außenfolie Licht im Wellenbereich von 350 bis 500 nm absorbiert und/oder reflektiert, wobei als organisches oder anorganisches Farbpigment in der mindestens einen Polymerschicht der Außenfolie vorzugsweise mindestens ein Farbpigment ausgewählt aus der Gruppe umfassend Carbonyl-Farbstoffe, vorzugsweise Chinone, Indigo-Farbstoffe und Chinacridone, Azo-Verbindungen, Cyanin-Verbindungen, vorzugsweise Triphenylmethan-Verbindungen, Azomethine, Isoindoline, Dioxazine, Metalloxide, Übergangsmetalloxide, Metalloxidhydrate und Übergangsmetalloxidhydrate, vorzugsweise ein gelbes Farbpigment oder ein gelber Farbstoff ausgewählt aus dieser Gruppe, vorliegt.

10. Schlauchliner (1) nach mindestens einem der vorhergehenden Ansprüche, **dadurch gekennzeichnet, dass** die mindestens eine Außenfolie (8; 8a, 8b) mehrschichtig ist, wobei mindestens einer ihrer Oberflächenschichten ein Olefin-Homo- oder -Copolymer enthält.

11. Schlauchliner (1) nach mindestens einem der vorhergehenden Ansprüche, **dadurch gekennzeichnet, dass** auf der zur Harz-Träger-Lage (3) gerichteten Innenseite mindestens einer Außenfolie (8; 8a, 8b), vorzugsweise aller entsprechenden Außenfolien (8; 8a, 8b), ein Vlies (5) oder ein anderes für Flüssigkeiten und Harze saugfähiges Material aufgebracht ist zum Zwecke der besseren Anhaftung an das Harz (3b) der Harz-Träger-Lage (3).

12. Schlauchliner (1) nach mindestens einem der vorhergehenden Ansprüche, **dadurch gekennzeichnet, dass** zwischen der Harz-Träger-Lage (3) und dem Außenfoliensystem (7) mindestens eine Wickelfolie (6) oder eine Verkleidungsfolie vorgesehen ist, auf die optional ein Vlies (5) oder ein anderes für Flüssigkeiten und Harze saugfähiges Material aufgebracht ist, wobei die Anordnung von Außenfoliensystem (7) und Wickelfolie (6) oder Verkleidungsfolie insgesamt eine Transmission für sichtbares Licht ab einer Wellenlänge von 550 nm von mindestens 1% aufweist, vorzugsweise von mindestens 3%, bevorzugt von mindestens 5%.

13. Verfahren zur Herstellung eines Schlauchliners (1) nach mindestens einem der vorhergehenden Ansprüche, wobei auf die an der mindestens eine Außenfolie (8; 8a, 8b) anliegenden, als Gewebe (10) ausgebildeten mindestens einen Verstärkungsbahn (9; 9a, 9b) eine klebende Polymer-Beschichtung (11) aufgebracht wird, wobei das Gewebe (10) mit Hilfe dieser klebenden Polymer-Beschichtung (11) mit der mindestens einen Außenfolie (8; 8a, 8b) verklebt wird.

14. Verwendung eines Schlauchliners (1) nach einem oder mehreren der Ansprüche 1 bis 12 für die Sanierung eines insbesondere unterirdisch verlegten Kanals,
- wobei das Außenfoliensystem (7) mindestens eine Außenfolie (8; 8a, 8b) in Form einer UV-Strahlung und kurzwelliges, sichtbares Licht absorbierenden und/oder reflektierenden, einschichtigen oder mehrschichtigen Folie umfasst, die in einer oder mehreren Polymerschichten mindestens ein kurzwelliges, sichtbares Licht absorbierendes und/oder reflektierendes organisches oder anorganisches Farbpigment oder einen entsprechenden Farbstoff, und mindestens eine die UV-Strahlung absorbierende und/oder reflektierende, organische oder anorganische Verbindung enthält,
- wobei das Außenfoliensystem (7) weiterhin mindestens eine mechanisch stabile Verstärkungsbahn (9; 9a, 9b) umfasst, die an der besagten Außenfolie (8; 8a, 8b) anliegt, wobei die mindestens eine Außenfolie (8; 8a, 8b) zur Harz-Träger-Lage (3) und die mindestens eine Verstärkungsbahn (9; 9a, 9b) in der Einbausituation des Schlauchliners (1) zur Kanalwand gerichtet ist,
- wobei das Außenfoliensystem (7) einen Transmissionsgrad für sichtbares Licht bei mindestens einer Wellenlänge im Bereich von 550 nm bis 800 nm von mindestens 1% aufweist, und
- wobei die mindestens eine Verstärkungsbahn (9; 9a, 9b) ein Gewebe (10) umfasst, das vorzugsweise überwiegend oder vollständig aus Polyester besteht, wobei das Gewebe (10) eine Maschenweite in md-Richtung und/oder in cd-Richtung von kleiner als 2 cm, bevorzugt kleiner als 1 cm, am meisten bevorzugt kleiner als 5 mm aufweist.

## Claims

1. A tubular liner (1) for the rehabilitation of an, in particular, underground sewer pipe, comprising at least:
- an inner tubular film (2) extending in the longitudinal direction of the tubular liner (1);
- a resin-carrier layer (3) extending in the longitudinal direction of the tubular liner (1) and surrounding the inner tubular film (2), wherein the resin (3b) of the resin-carrier layer (3) is curable with the aid of UV radiation;
- a mechanically protective outer film system (7) surrounding the resin-carrier layer (3) and extending in the longitudinal direction of the tubular liner (1),
- wherein the outer film system (7) comprises at least one outer film (8; 8a, 8b) in the form of a UV-radiation- and short-wavelength, visible light-absorbing and/or -reflecting, single-layer or multi-layer film which contains, in one or more polymer layers, at least one short-wavelength, visible light-absorbing and/or
- reflecting, organic or inorganic color pigment or a corresponding dye, and at least one organic or inorganic compound which absorbs and/or reflects the UV radiation,
- wherein, the outer film system (7) further comprises at least one mechanically stable reinforcing web (9; 9a, 9b) which rests on the aforementioned outer film (8; 8a, 8b), wherein the at least one outer film (8; 8a, 8b) is directed to the resin-carrier layer (3) and the at least one reinforcing web (9; 9a, 9b), in the installed situation of the tubular liner (1), is directed to the sewer pipe wall, and
wherein the outer film system (7) has a transmittance for visible light at at least one wavelength in the range of 550 nm to 800 nm of at least 1%,
wherein the at least one reinforcing web (9; 9a, 9b) comprises a fabric (10) which preferentially predominantly or completely consists of polyester, wherein the fabric (10) has a mesh size in the MD direction and/or in the CD direction of less than 2 cm, preferentially less than 1 cm, most preferentially less than 5 mm, with the MD direction being the machine direction, i.e. the processing direction during manufacturing and the CD direction being the transverse direction.

2. The tubular liner (1) according to claim 1, **characterized in that** the at least one reinforcing web (9; 9a, 9b) has one more of the following mechanical properties:
a) the tensile strength longitudinal to M in accordance with DIN EN ISO 527-3 is greater than 20 N/mm², preferentially greater than 30 N/mm², most preferentially greater than 40 N/mm²;
b) the tensile strength transverse to M in accordance with DIN EN ISO 527-3 is greater than 20 N/mm², preferentially greater than 30 N/mm², most preferentially greater than 40 N/mm²;
c) the tensile strength in accordance with DIN EN ISO 1421 is greater than 200 N/5cm, preferentially greater than 400 N/5cm, most preferentially greater than 600 N/5cm, for example, greater than 800 N/5cm, most preferentially greater than 1000 N/5cm;
d) the elongation at tear or break in a longitudinal direction (εB) and elongation at tear or break in a transverse direction (εB) in accordance with DIN EN ISO 527-3 and DIN EN ISO 527-3, respectively, is less than 200%, preferentially less than 100%, most preferentially less than 50%;
e) the trap tear resistance in a trapezoidal manner in a longitudinal direction or in a trapezoidal manner in a transverse direction in accordance with DIN 53363 and DIN 53363, respectively, is greater than 100 N, preferentially greater than 200 N; and/or
f) the puncture resistance in accordance with ASTM E 154 is greater than 300 N, preferentially greater than 500 N, most preferentially greater than 800 N.

3. The tubular liner (1) according to claim 1 or 2, **characterized in that** the outer film system (7) has a transmittance for visible light at at least one wavelength in the range of 550 nm to 800 nm of at least 3%, preferentially of at least 5%.

4. The tubular liner (1) according to one of the preceding claims, **characterized in that** the fabric (10) is provided on at least one side with a polymer coating (11), preferentially is provided on both sides with a polymer coating (11) which can be the same or different on the two sides and encloses the fabric (10) preferably from both sides, wherein the polymer of the polymer coating or at least one polymer of the polymer coating is preferably designed to be adhesive in order to bond the coated fabric (10) to the at least one outer film (8; 8a, 8b).

5. The tubular liner (1) according to at least one of the preceding claims, **characterized in that** the at least one outer film (8; 8a, 8b) and the at least one reinforcing web (9; 9a, 9b) are connected to one another, preferably bonded and preferentially across their entire abutting surfaces.

6. The tubular liner (1) according to at least one of claims 1 to 4, **characterized in that** the at least one outer film (8; 8a, 8b) rests loosely and unconnected on the at least one reinforcing web (9; 9a, 9b).

7. The tubular liner (1) according to at least one of the preceding claims, **characterized in that** the outer film system (7) comprises at least one junction (15; 25) preferably extending in the longitudinal direction of the tubular liner (1), wherein the at least one junction is arranged:
- between the two longitudinal edges (18) of an aforementioned outer film (8), or
- between the longitudinal edges (18a, 18b) of two or more aforementioned outer films (8a, 8b), or
- between the two longitudinal edges (19) of an aforementioned reinforcing web (9), or
- between the longitudinal edges (19a, 19b) of two or more aforementioned reinforcing webs (9a, 9b).

8. The tubular liner (1) according to the preceding claim, **characterized in that** the at least one junction (15; 25), preferably in the longitudinal direction of the tubular liner (1), is formed with the aid of an optionally double-sided tape, a thermal welding seam, a hot-melt adhesive, or another adhesive in the form of a continuous adhesive seam or sealed seam, or an interrupted adhesive application.

9. The tubular liner (1) according to at least one of the preceding claims, **characterized in that** the organic or inorganic color pigment or the dye in the outer film absorbs and/or reflects light in the wavelength range of 350 nm to 500 nm, wherein preferably at least one color pigment selected from the group comprising carbonyl dyes, preferably quinones, indigo dyes and quinacridones, azo compounds, cyanine compounds, preferably triphenylmethane compounds, azomethines, isoindolines, dioxazines, metal oxides, transition metal oxides, metal oxide hydrates and transition metal oxide hydrates, preferably a yellow color pigment or a yellow dye selected from this group, is present as the organic or inorganic color pigment in the at least one polymer layer of the outer film.

10. The tubular liner (1) according to at least one of the preceding claims, **characterized in that** the at least one outer film (8; 8a, 8b) is multi-layer, wherein at least one of its surface layers contains an olefin homo-polymer or copolymer.

11. The tubular liner (1) according to at least one of the preceding claims, **characterized in that**, on the inner side of at least one outer film (8; 8a, 8b), preferably of all outer films (8; 8a, 8b), directed to the resin-carrier layer (3), a fleece (5) or another material that is absorbent for liquids and resins is applied for the purpose of better enabling bonding to the resin (3b) of the resin-carrier layer (3).

12. The tubular liner (1) according to at least one of the preceding claims, **characterized in that**, provided between the resin-carrier layer (3) and the outer film system (7) is at least one wrapping film (6) or one covering film, onto which a fleece (5) or another material that is absorbent for liquids and resins has been optionally applied, wherein the arrangement of outer film system (7) and wrapping film (6) or covering film overall has a transmission for visible light at a wavelength of 550 nm and higher of at least 1%, preferably of at least 3%, preferentially of at least 5%.

13. A method for manufacturing a tubular liner (1) according to at least one of the preceding claims, wherein an adhesive polymer coating (11) is applied onto the at least one reinforcing web (9; 9a, 9b) resting on the at least one outer film (8; 8a, 8b) and formed as fabric (10), wherein the fabric (10) is bonded to the at least one outer film (8; 8a, 8b) with the aid of this adhesive polymer coating (11).

14. Use of a tubular liner (1) according to one or more of claims 1 to 12 for the rehabilitation of an, in particular, underground sewer pipe,
- wherein the outer film system (7) comprises at least one outer film (8; 8a, 8b) in the form of a UV-radiation- and short-wavelength, visible light-absorbing and/or -reflecting, single-layer or multi-layer film which contains, in one or more polymer layers, at least one short-wavelength, visible light-absorbing and/or
- reflecting, organic or inorganic color pigment or a corresponding dye, and at least one organic or inorganic compound which absorbs and/or reflects the UV radiation,
- wherein, the outer film system (7) further comprises at least one mechanically stable reinforcing web (9; 9a, 9b) which rests on the aforementioned outer film (8; 8a, 8b), wherein the at least one outer film (8; 8a, 8b) is directed to the resin-carrier layer (3) and the at least one reinforcing web (9; 9a, 9b), in the installed situation of the tubular liner (1), is directed to the sewer pipe wall, and
- wherein the outer film system (7) has a transmittance for visible light at at least one wavelength in the range of 550 nm to 800 nm of at least 1%, and
- wherein the at least one reinforcing web (9; 9a, 9b) comprises a fabric (10) which preferentially predominantly or completely consists of polyester, wherein the fabric (10) has a mesh size in the MD direction and/or in the CD direction of less than 2 cm, preferentially less than 1 cm, most preferentially less than 5 mm.

## Revendications

1. Gaine de chemisage de conduits (1) pour la réhabilitation d'une canalisation posée en particulier en souterrain, avec au moins :
- une feuille tubulaire intérieure (2) s'étendant dans le sens longitudinal de la gaine de chemisage de conduits (1) ;
- avec une couche porteuse en résine (3) s'étendant dans le sens longitudinal de la gaine de chemisage (1) de conduits et entourant la feuille tubulaire intérieure (2), la résine (3b) de celle-ci étant durcissable au moyen d'un rayonnement UV ;
- avec un système de feuille extérieure (7) mécaniquement protecteur, entourant la couche porteuse en résine (3), qui s'étend dans le sens longitudinal de la gaine de chemisage de conduits (1),
- dans lequel le système de feuille extérieure (7) comprend au moins une feuille extérieure (8 ; 8a, 8b) sous la forme d'une feuille monocouche ou multicouche absorbant et/ou réfléchissant le rayonnement UV et la lumière visible à ondes courtes, contenant dans une ou plusieurs couches de polymère au moins un pigment colorant organique ou inorganique absorbant et/ou réfléchissant la lumière visible à ondes courtes ou un colorant correspondant, et au moins un composé organique ou inorganique absorbant et/ou réfléchissant le rayonnement UV,
- dans lequel le système de feuille extérieure (7) comprend en outre au moins une feuille de renforcement (9 ; 9a, 9b) mécaniquement stable, qui est en contact avec ladite feuille extérieure (8 ; 8a, 8b), ladite, au moins une, feuille extérieure (8 ; 8a, 8b) étant dirigée vers la couche porteuse en résine (3) et ladite, au moins une, feuille de renforcement (9 ; 9a, 9b) étant dirigée vers la paroi de la canalisation dans la situation d'installation de la gaine de chemisage de conduits (1), et
dans lequel le système de feuille extérieure (7) a un facteur de transmission d'au moins 1 % pour la lumière visible à au moins une longueur d'onde dans la gamme de 550 nm à 800 nm,
dans lequel ladite, au moins une, feuille de renforcement (9 ; 9a, 9b) comprend un tissu (10) qui est constitué de préférence essentiellement ou entièrement de polyester, ledit tissu (10) ayant une largeur de maille dans la direction md et/ou dans la direction cd inférieure à 2 cm, de préférence inférieure à 1 cm, de manière la plus préférée inférieure à 5 mm,
dans lequel la direction md est le sens machine, c'est-à-dire le sens de marche de production et dans laquelle la direction cd est la direction transversale.

2. Gaine de chemisage de conduits (1) selon la revendication 1, **caractérisée en ce que** la, au moins une, feuille de renforcement (9 ; 9a, 9b) présente une ou plusieurs des propriétés mécaniques suivantes :
a) sa résistance à la traction longitudinale M selon la norme DIN EN ISO 527-3 est supérieure à 20 N/mm², de préférence supérieure à 30 N/mm², de manière la plus préférée supérieure à 40 N/mm²;
b) sa résistance à la traction transversale M selon la norme DIN EN ISO 527-3 est supérieure à 20 N/mm², de préférence supérieure à 30 N/mm², de manière la plus préférée supérieure à 40 N/mm²;
c) sa résistance à la traction selon la norme DIN EN ISO 1421 est supérieure à 200 N/5 cm, de préférence supérieure à 400 N/5 cm, de manière particulièrement préférée supérieure à 600 N/5 cm, par exemple supérieure à 800 N/5 cm, de manière la plus préférée supérieure à 1 000 N/5 cm ;
d) son allongement à la rupture ou à la rupture par traction dans le sens longitudinal (εB) et allongement à la rupture ou à la rupture par traction dans le sens transversal (εB) selon la norme DIN EN ISO 527-3 ou DIN EN ISO 527-3 est inférieur à 200 %, de préférence inférieur à 100 %, de manière la plus préférée inférieur à 50 % ;
e) sa résistance à la propagation de la déchirure trapézoïdale longitudinale ou trapézoïdale transversale selon la norme DIN 53363 ou DIN 53363 est supérieure à 100 N, de préférence supérieure à 200 N ; et/ou
f) sa résistance à la perforation selon la norme ASTM E 154 est supérieure à 300 N, de préférence supérieure à 500 N, de manière particulièrement préférée supérieure à 800 N.

3. Gaine de chemisage de conduits (1) selon la revendication 1 ou 2, **caractérisée en ce que** le système de feuille extérieure (7) a un facteur de transmission d'au moins 3 %, de préférence d'au moins 5 %, pour la lumière visible à au moins une longueur d'onde dans la gamme de 550 nm à 800 nm.

4. Gaine de chemisage de conduits (1) selon au moins l'une des revendications précédentes, **caractérisée en ce que** le tissu (10) est pourvu d'un revêtement polymère (11) sur au moins une face, de préférence sur les deux faces avec des revêtements polymères respectifs qui peuvent être identiques ou différents et qui enveloppent le tissu (10) de préférence des deux côtés, le polymère du revêtement polymère ou au moins un polymère des revêtements polymères se présentant de préférence sous une forme adhésive pour coller le tissu revêtu (10) à la, au moins, une feuille extérieure (8 ; 8a, 8b).

5. Gaine de chemisage de conduits (1) selon au moins l'une des revendications précédentes, **caractérisée en ce que** la, au moins une, feuille extérieure (8 ; 8a, 8b) et la, au moins une, feuille de renforcement (9 ; 9a, 9b) sont jointes l'un à l'autre, de préférence collées et de préférence sur la totalité de leurs surfaces en contact l'une avec l'autre.

6. Gaine de chemisage de conduits (1) selon au moins l'une des revendications 1 à 4, **caractérisée en ce que** la, au moins une, feuille extérieure (8 ; 8a, 8b) est en contact de manière libre sans connexion avec la, au moins une, feuille de renforcement (9 ; 9a, 9b).

7. Gaine de chemisage de conduits (1) selon au moins l'une des revendications précédentes, **caractérisée en ce que** le système de feuille extérieure (7) présente au moins un point de raccordement (15 ; 25) s'étendant de préférence dans le sens longitudinal de la gaine de chemisage (1) de conduits, le, au moins un, point de raccordement étant disposé :
- entre les deux bords longitudinaux (18) d'une dite feuille extérieure (8), ou
- entre les bords longitudinaux (18a, 18b) de deux ou plusieurs desdites feuilles extérieures (8a, 8b), ou
- entre les deux bords longitudinaux (19) d'une dite feuille de renforcement (9), ou
- entre les bords longitudinaux (19a, 19b) de deux ou plusieurs desdites feuilles de renforcement (9a, 9b).

8. Gaine de chemisage de conduits (1) selon la revendication précédente, **caractérisée en ce que** le, au moins un, point de raccordement (15 ; 25), est relié l'un à l'autre de préférence dans le sens longitudinal de la gaine de chemisage (1) de conduits au moyen d'un ruban adhésif éventuellement à doubles faces adhésives, d'un cordon de soudure thermique, d'une colle thermofusible ou d'une autre colle sous la forme d'un cordon de collage continu ou d'un joint thermosoudé ou d'une application de colle interrompue.

9. Gaine de chemisage de conduits (1) selon au moins l'une des revendications précédentes, **caractérisée en ce que** le pigment colorant organique ou inorganique ou le colorant dans la feuille extérieure absorbe et/ou réfléchit la lumière dans la gamme d'ondes de 350 à 500 nm, dans laquelle est de préférence disponible en tant que pigment colorant organique ou inorganique dans la, au moins une, couche polymère de la feuille extérieure, au moins un pigment colorant choisi dans le groupe comprenant les colorants carbonyles, de préférence les quinones, les colorants indigo et les quinacridones, les composés azoïques, les composés cyanines, de préférence les composés triphénylméthaniques, les azométhines, les isoindolines, les dioxazines, les oxydes métalliques, les oxydes métalliques de transition, les hydrates d'oxydes métalliques et les hydrates d'oxydes métalliques de transition, de préférence un pigment colorant jaune ou un colorant jaune choisi dans ce groupe.

10. Gaine de chemisage de conduits (1) selon au moins l'une des revendications précédentes, **caractérisée en ce que** la, au moins une, feuille extérieure (8 ; 8a, 8b) est à plusieurs couches, dans laquelle au moins une de ses couches superficielles contient un homopolymère ou un copolymère d'oléfine.

11. Gaine de chemisage de conduits (1) selon au moins l'une des revendications précédentes, **caractérisée en ce qu'**un non-tissé (5) ou un autre matériau absorbant pour les liquides et les résines est appliqué sur le côté intérieur d'au moins une feuille extérieure (8 ; 8a, 8b) faisant face à la couche porteuse en résine (3), de préférence de toutes les feuilles extérieures (8 ; 8a, 8b) correspondantes, dans le but d'une meilleure adhérence à la résine (3b) de la couche porteuse en résine (3).

12. Gaine de chemisage de conduits (1) selon au moins l'une des revendications précédentes, caractérisée en ce qu'il est prévu entre la couche porteuse en résine (3) et le système de feuille extérieure (7) au moins une feuille d'enroulage (6) ou une feuille de chemisage, sur laquelle est appliqué facultativement un non-tissé (5) ou un autre matériau absorbant pour les liquides et les résines, dans laquelle l'agencement du système de feuille extérieure (7) et de la feuille d'enroulage (6) ou de la film de chemisage présente une transmission totale d'au moins 1 %, de préférence d'au moins 3 %, de préférence d'au moins 5 %, pour la lumière visible d'une longueur d'onde à partir de 550 nm.

13. Procédé pour la fabrication d'une gaine de chemisage de conduits (1) selon au moins l'une des revendications précédentes, dans lequel un revêtement polymère adhésif (11) est appliqué sur l'au moins une feuille de renforcement (9 ; 9a, 9b) conçue sous la forme d'un tissu (10) et en contact avec l'au moins une feuille extérieure (8 ; 8a, 8b), le tissu (10) étant collé à l'au moins une feuille extérieure (8 ; 8a, 8b) à l'aide de ce revêtement polymère adhésif (11).

14. Utilisation d'une gaine de chemisage de conduits (1) selon l'une quelconque ou plusieurs des revendications 1 à 12 pour la réhabilitation d'une canalisation posée en particulier en souterrain,
- dans laquelle le système de feuille extérieure (7) comprend au moins une feuille extérieure (8 ; 8a, 8b) sous la forme d'une feuille monocouche ou multicouche absorbant et/ou réfléchissant le rayonnement UV et la lumière visible à ondes courtes, contenant dans une ou plusieurs couches de polymère au moins un pigment colorant organique ou inorganique absorbant et/ou réfléchissant la lumière visible à ondes courtes ou un colorant correspondant, et au moins un composé organique ou inorganique absorbant et/ou réfléchissant le rayonnement UV,
- dans laquelle le système de feuille extérieure (7) comprend en outre au moins une feuille de renforcement (9 ; 9a, 9b) mécaniquement stable, qui est en contact avec ladite feuille extérieure (8 ; 8a, 8b), ladite, au moins une, feuille extérieure (8 ; 8a, 8b) étant dirigée vers la couche porteuse en résine (3) et ladite, au moins une, feuille de renforcement (9 ; 9a, 9b) étant dirigée vers la paroi de la canalisation dans la situation d'installation de la gaine de chemisage de conduits (1),
- dans laquelle le système de feuille extérieure (7) a un facteur de transmission d'au moins 1 % pour la lumière visible à au moins une longueur d'onde dans la gamme de 550 nm à 800 nm, et
- dans laquelle ladite, au moins une, feuille de renforcement (9 ; 9a, 9b) comprend un tissu (10) qui est constitué de préférence essentiellement ou entièrement de polyester, ledit tissu (10) ayant une largeur de maille dans la direction md et/ou dans la direction cd inférieure à 2 cm, de préférence inférieure à 1 cm, de manière la plus préférée inférieure à 5 mm.
